# EUROPEAN PATENT SPECIFICATION

(11) **EP 3 993 372 B1**
(45) Date of publication and mention of the grant of the patent: **25.02.2026**
(21) Application number: 20846768.8
(22) Date of filing: 21.07.2020
(51) Int. Cl.: H04M 1/02, G06F 1/16

(54) **FOLDING ASSEMBLY AND ELECTRONIC DEVICE**
FALTANORDNUNG UND ELEKTRONISCHE VORRICHTUNG
ENSEMBLE DE PLIAGE ET DISPOSITIF ÉLECTRONIQUE

(30) Priority: 31.07.2019 CN 201910701908
(43) Date of publication of application: 04.05.2022
(73) Proprietor: Huawei Technologies Co., Ltd., Shenzhen, Guangdong 518129 (CN)
(72) Inventor: MA, Chunjun, Shenzhen, Guangdong 518129 (CN); XIE, Jian, Shenzhen, Guangdong 518129 (CN); BAO, Zhangmin, Shenzhen, Guangdong 518129 (CN)
(74) Representative: Pfenning, Meinig & Partner mbB
(86) International application number: PCT/CN2020/103147
(87) International publication number: WO 2021/017936

(56) References cited:
- EP-A1- 3 720 102
- WO-A1-2019/120167
- CN-A- 109 002 079
- CN-A- 109 859 630
- CN-A- 109 859 630
- CN-A- 110 035 140
- CN-A- 110 035 140
- CN-A- 110 445 913
- CN-U- 207 010 739
- CN-U- 209 164 358
- CN-U- 210 168 069
- KR-A- 20050 081 289
- US-A1- 2016 165 024
- US-A1- 2018 347 245

## Description

### TECHNICAL FIELD

This application relates to the field of foldable electronic product technologies, and in particular, to a folding assembly and an electronic device.

### BACKGROUND

With large-scale application of a flexible display, a foldable electronic device (for example, a mobile phone) emerges accordingly. The electronic device includes a first planar region, a bending region, and a second planar region that are successively connected. The bending region is deformable so that the first planar region is unfolded or folded with respect to the second planar region. When the electronic device is in an unfolded state, large-screen display can be implemented. When the electronic device is in a folded state, the electronic device can be easily stored and carried.

The flexible display includes a curved part located in the bending region. The flexible display has relatively low strength and rigidity. Therefore, when the electronic device is in the folded state, if a user performs a pressing operation on the curved part of the flexible display, or a user holds the electronic device and applies a force to the curved part of the flexible display, the curved part of the flexible display is likely to collapse due to lack of support and further gets damaged, resulting in relatively poor user experience of the electronic device.

WO 2019/120167 describes a rotating mechanism and a foldable terminal.

US 2018/347245 describes a support device for a foldable flexible screen.

### SUMMARY

This application provides a folding assembly capable of supporting a curved part of a flexible display, and an electronic device to which the folding assembly is applied. The scope of protection of the present invention is set out by the appended claims.

According to a first aspect, this application provides a folding assembly. The folding assembly may be applied to an electronic device with a flexible display. The folding assembly includes a first housing, a second housing, and a hinge assembly. The hinge assembly is connected between the first housing and the second housing. The hinge assembly is deformable so that the first housing is folded or unfolded with respect to the second housing.

The first housing includes a first main housing portion and a first supporting portion. The first supporting portion is connected to a side, of the first main housing portion, that is close to the hinge assembly. The second housing includes a second main housing portion and a second supporting portion. The second supporting portion is connected to a side, of the second main housing portion, that is close to the hinge assembly.

The first main housing portion is configured to support a first flat part of the flexible display. The second main housing portion is configured to support a second flat part of the flexible display. When the first housing is in a folded state with respect to the second housing, the first supporting portion and the second supporting portion are configured to jointly support a curved part of the flexible display. The curved part of the flexible display is connected between the first flat part of the flexible display and the second flat part of the flexible display.

In this application, when the first housing is in the folded state with respect to the second housing, the first supporting portion and the second supporting portion can jointly support the curved part of the flexible display, to help keep the curved part of the flexible display in a relatively stable shape. Therefore, when the curved part of the flexible display is subject to an external force (for example, a user performs an operation, such as pressing or touching, on the curved part of the flexible display, or a user holds the electronic device and applies a force to the curved part of the flexible display), a risk of collapsing or indentation is relatively low, the flexible display has relatively high reliability and a relatively long service life, and the flexible display also looks and feels better.

The first main housing portion provides support for the first flat part of the flexible display, and the second main housing portion provides support for the second flat part of the flexible display. Therefore, when the first flat part and the second flat part of the flexible display are subject to an external force (for example, touching by the user or accidental collision), a risk of collapsing or indentation is relatively low, and the flexible display has relatively high reliability and a relatively long service life.

It can be understood that the support provided by the first main housing portion for the first flat part of the flexible display may be direct support (for example, support through contact) or indirect support (for example, support by using an intermediate mechanical part). The support provided by the second main housing portion for the second flat part of the flexible display may be direct support or indirect support. The support provided by the first supporting portion and the second supporting portion for the curved part of the flexible display may be direct support or indirect support.

According to the invention, the first supporting portion has a first supporting surface. The second supporting portion has a second supporting surface. Both the first supporting surface and the second supporting surface are arc surfaces. When the first housing is in the folded state with respect to the second housing, a center line of the first supporting surface coincides with a center line of the second supporting surface.

Hence, when the first housing is in the folded state with respect to the second housing, the first supporting surface and the second supporting surface are configured to jointly support the curved part of the flexible display. When the first housing is in the folded state with respect to the second housing, because both the first supporting surface and the second supporting surface are arc surfaces and the center line of the first supporting surface coincides with the center line of the second supporting surface, a surface on which the first supporting surface is located coincides with a surface on which the second supporting surface is located. Therefore, the curved part of the flexible display can be continuously and smoothly supported, achieving a better supporting effect.

In an embodiment of this application, shapes of the first supporting surface and the second supporting surface may be designed through profile modeling based on a shape of the curved part of the flexible display when the first housing is in the folded state with respect to the second housing. Therefore, when the first housing is in the folded state with respect to the second housing, the first supporting surface and the second supporting surface can provide profiling support for the curved part of the flexible display, achieving a better supporting effect. This reduces a risk of collapsing or indentation when the curved part of the flexible display is subject to an external force, and improves reliability and a service life of the flexible display. An example is as follows:

In some embodiments, when the first housing is in the folded state with respect to the second housing, the curved part of the flexible display may be in a semicircular shape. The first supporting surface and the second supporting surface may be circular arc surfaces. In this case, when the first housing is in the folded state with respect to the second housing, a center of the first supporting surface coincides with a center of the second supporting surface, and the first supporting surface and the second supporting surface are located on one cylindrical surface.

In some other embodiments, when the first housing is in the folded state with respect to the second housing, the curved part of the flexible display may be in a semi-elliptic shape. The first supporting surface and the second supporting surface may be elliptic arc surfaces. In this case, when the first housing is in the folded state with respect to the second housing, a center of the first supporting surface coincides with a center of the second supporting surface, and the first supporting surface and the second supporting surface are located on one elliptic cylindrical surface.

In some other embodiments, the curved part of the flexible display may be alternatively disposed in another shape. For example, the curved part of the flexible display may alternatively include a planar section and two cambered sections, one cambered section is connected between the first flat part of the flexible display and the planar section, and the other cambered section is connected between the second flat part of the flexible display and the planar section. The first supporting surface and the second supporting surface are disposed based on the shape of the curved part of the flexible display in the folded state.

In this embodiment of this application, a structure of the first supporting portion may be designed in a plurality of manners. Examples are as follows.

In some embodiments, the first supporting portion is in a long strip shape. An extension direction of the first supporting portion is parallel to a rotation axis of the hinge assembly. In this embodiment, the first supporting portion continuously supports the curved part of the flexible display in the direction parallel to the rotation axis of the hinge assembly, achieving a relatively large supporting area and a relatively good supporting effect.

For example, the second supporting portion is in a long strip shape. An extension direction of the first supporting portion is parallel to a rotation axis of the hinge assembly. The second supporting portion continuously supports the curved part of the flexible display in the direction parallel to the rotation axis of the hinge assembly, achieving a relatively large supporting area and a relatively good supporting effect. For example, the first supporting portion and the second supporting portion are symmetrically disposed.

For example, several vias or grooves arranged at intervals may be provided on the first supporting portion, to reduce mass of the first supporting portion, and facilitate thinning of the electronic device. When a groove is provided on the first supporting portion, an opening of the groove is located on a side, of the first supporting portion, that backs the flexible display.

In some other embodiments, the first supporting portion includes a plurality of first supporting blocks arranged at intervals. An arrangement direction of the plurality of first supporting blocks is parallel to the rotation axis of the hinge assembly. In this embodiment, when the first housing is in the folded state with respect to the second housing, the first supporting portion can support the curved part of the flexible display, and has relatively small mass, thereby facilitating thinning of the electronic device.

For example, the second supporting portion includes a plurality of second supporting blocks arranged at intervals. An arrangement direction of the plurality of second supporting blocks is parallel to the rotation axis of the hinge assembly. The plurality of second supporting blocks directly face the plurality of first supporting blocks one by one. In another example, the plurality of second supporting blocks of the second supporting portion and the plurality of first supporting blocks of the first supporting portion are arranged in a staggered manner. To be specific, a second supporting block directly faces a gap between two adjacent first supporting blocks, and a first supporting block directly faces a gap between two adjacent second supporting blocks. In this case, after the first supporting portion and the second supporting portion are fit, regions in which the first supporting portion and the second supporting portion support the curved part of the flexible display are arranged more evenly, thereby helping reduce a risk of collapsing or indentation when the curved part of the flexible display is subject to an external force.

In some embodiments, the hinge assembly includes one or more rotary members, and two ends of the rotary member are arranged to rotate with respect to each other. The two ends of the rotary member are respectively connected to the first main housing portion and the second main housing portion. Both the first supporting portion and the second supporting portion are arranged in a staggered manner with the rotary member. In this embodiment, the first supporting portion, the second supporting portion, and the rotary member have no stacking relationship in a thickness direction of the electronic device, and are substantially laid horizontally in a bending region of the electronic device, thereby helping reduce a thickness of the electronic device in the bending region to implement thinning.

In some embodiments, the folding assembly has a wiring space. The wiring space is used for routing wires such as a flexible circuit board of the electronic device. The wires of the electronic device may further include a coaxial line configured to transmit an antenna signal, and the like. The wiring space includes a first cavity, a first space, a connection space, a second space, and a second cavity that are successively connected. The first cavity is located in the first main housing portion. The first space corresponds to the first supporting portion. The first supporting portion forms a part of a wall surface of the first space. The second space corresponds to the second supporting portion. The second supporting portion forms a part of a wall surface of the second space. The second cavity is located in the second main housing portion.

In this embodiment, the flexible circuit board of the electronic device is arranged in the wiring space to span the first supporting portion and the second supporting portion, and two ends of the flexible circuit board are respectively accommodated on an inner side of the first main housing portion and an inner side of the second main housing portion, to connect a component located on the inner side of the first main housing portion and a component located on the inner side of the second main housing portion. Because the first supporting portion and the second supporting portion are housing structures of the electronic device, when the first supporting portion and the second supporting portion are capable of supporting the curved part of the flexible display, the first supporting portion and the second supporting portion can be disposed into a structure with a relatively small volume to reduce spaces occupied by the first supporting portion and the second supporting portion, so that sufficient spaces can be reserved near the first supporting portion and the second supporting portion (for example, spaces under the first supporting portion and the second supporting portion) as a part of the wiring space. Therefore, the flexible circuit board of the electronic device can extend from the first main housing portion to the second main housing portion through the wiring space to implement signal transmission.

For example, the first supporting portion and the second supporting portion may be disposed into an arc arm-like structure to reduce volumes and occupied spaces. For example, the first supporting portion further includes a first inner side surface. The first inner side surface backs the first supporting surface. A distance between the first inner side surface and the first supporting surface is a thickness of the first supporting portion, and the first supporting portion is in an equi-thickness structure. In this case, the first supporting portion is substantially in a bent plate-like structure. A structure of the second supporting portion is arranged with reference to the structure of the first supporting portion.

In some embodiments, the folding assembly further includes a first sliding plate, a second sliding plate, and a rotary connector. The rotary connector is connected between the first sliding plate and the second sliding plate. The rotary connector is deformable so that the first sliding plate is folded or unfolded with respect to the second sliding plate. The first sliding plate is slidably connected to the first main housing portion. The second sliding plate is slidably connected to the second main housing portion.

In this embodiment, when the first housing is unfolded with respect to the second housing, the first sliding plate is unfolded with respect to the second sliding plate. When the first housing is folded with respect to the second housing, the first sliding plate is folded with respect to the second sliding plate. The sliding plate assembly is located on a side, of the flexible circuit board and the hinge assembly, that is away from the flexible display. In other words, the flexible circuit board and the hinge assembly are located between the sliding plate assembly and the flexible display, and are hidden and protected as internal structures of the electronic device.

In some embodiments, the first space is formed between the first supporting portion and the first sliding plate, and the second space is formed between the second supporting portion and the second sliding plate.

In this embodiment, because both the first supporting portion and the first sliding plate may be disposed into a structure with a relatively small thickness, a volume of the first space is relatively large. Similarly, because both the second supporting portion and the second sliding plate may be disposed into a structure with a relatively small thickness, a volume of the second space is relatively large. Therefore, the wiring space is relatively large, and can provide a sufficient space for routing and deformation of the flexible circuit board.

In some embodiments, the hinge assembly further includes a connector. The hinge assembly includes a plurality of rotary members. The plurality of rotary members are arranged at intervals, and an arrangement direction is parallel to the rotation axis of the hinge assembly. The connector connects the plurality of rotary members.

In this embodiment, the plurality of components of the hinge assembly are assembled into an integrated structure, so that the hinge assembly is steadier and firmer, and a rotational movement of the electronic device during folding and unfolding is steadier and more reliable.

In some embodiments, the connection space is formed between the connector and the first sliding plate and second sliding plate. In this embodiment, because the connector has a relatively small volume, the connection space has a relatively large volume, and the wiring space can provide a sufficient space for routing and deformation of the flexible circuit board.

In some embodiments, the connector has a third supporting surface. The third supporting surface is located on a side, of the connector, that is far away from the first sliding plate and the second sliding plate. The third supporting surface is configured to support the curved part of the flexible display. In this embodiment, the connector supports the curved part of the flexible display by using the third supporting surface, to reduce a risk of collapsing or indentation when the curved part of the flexible display is subject to an external force.

In some embodiments, the third supporting surface is an arc surface. When the first housing is in the folded state with respect to the second housing, a center line of the third supporting surface coincides with the center line of the first supporting surface. In this embodiment, the first supporting surface, the second supporting surface, and the third supporting surface jointly support the curved part of the flexible display. In addition, a total area of the plurality of supporting surfaces configured to support the curved part of the flexible display is larger, and the supporting surfaces have good uniformity and can provide continuous and smooth support for the curved part of the flexible display in the folded state, so that the curved part of the flexible display feels better and has higher reliability.

In some embodiments, the rotary member has a fourth supporting surface. The fourth supporting surface is configured to support the curved part of the flexible display. In this embodiment, the rotary member supports the curved part of the flexible display by using the fourth supporting surface, to reduce a risk of collapsing or indentation when the curved part of the flexible display is subject to an external force.

For example, the fourth supporting surface is an arc surface. When the first housing is in the folded state with respect to the second housing, a center line of the fourth supporting surface coincides with a center line of the first supporting surface. In this case, the first supporting surface, the second supporting surface, and the fourth supporting surface jointly support the curved part of the flexible display. In addition, a total area of the plurality of supporting surfaces configured to support the curved part of the flexible display is larger, and the supporting surfaces have good uniformity and can provide continuous and smooth support for the curved part of the flexible display in the folded state, to help keep the curved part of the flexible display in a relatively stable shape and reduce a risk of collapsing or indentation when the curved part of the flexible display is subject to an external force, so that the curved part of the flexible display feels better and has higher reliability.

In some embodiments, the folding assembly further includes a foldable supporting member. The foldable supporting member includes a first side portion and a second side portion away from the first side portion. The foldable supporting member is deformable so that the first side portion is folded or unfold with respect to the second side portion.

The first side portion is connected to the first main housing portion. The second side portion is connected to the second main housing portion. The foldable supporting member is configured to support a part of the first flat part of the flexible display, the curved part of the flexible display, and a part of the second flat part of the flexible display.

In this embodiment, the foldable supporting member covers the hinge assembly, the first supporting portion, and the second supporting portion. The foldable supporting member is configured to support the flexible display. Because the foldable supporting member is in a continuous integrated structure, continuous and smooth support can be provided for the flexible display, so that the flexible display looks and feels better.

For example, a middle part of the foldable supporting member is fastened (for example, bonded) to a middle part of the curved part of the flexible display. The middle part of the foldable supporting member is fastened to the hinge assembly. In this embodiment, the flexible display is fastened to the hinge assembly. When the first housing rotates with respect to the second housing, the middle part of the curved part of the flexible display moves along with the hinge assembly, thereby reducing a debonding probability for the curved part of the flexible display, and reducing an arching risk for the flexible display.

In some embodiments, the foldable supporting member includes a flexible substrate and a plurality of supporting bars fastened to the flexible substrate at intervals. An extension direction of each of the supporting bars is parallel to the rotation axis of the hinge assembly. An arrangement direction of the plurality of supporting bars is perpendicular to the rotation axis of the hinge assembly. The first side portion is fastened to the first main housing portion, and the second side portion is fastened to the second main housing portion.

In this embodiment, the flexible substrate enables the foldable supporting member to have specific flexibility, so that a maximum bending angle of the foldable supporting member can meet a folding requirement of the folding assembly. Because the supporting bars can increase rigidity of the foldable supporting member, the foldable supporting member has good supporting performance.

For example, rigidity of the supporting bars is higher than that of the flexible substrate. The supporting bars may be made of a metallic material such as stainless steel or an aluminum alloy, or may be made of hard plastics such as polyvinyl chloride. The flexible substrate may be made of a silicone gel material with relatively high flexibility.

In some embodiments, the plurality of supporting bars include a first supporting bar and a second supporting bar. When the first housing is in the folded state with respect to the second housing, the first supporting bar is disposed on the first supporting portion and the hinge assembly, and the second supporting bar is disposed on the second supporting portion and the hinge assembly.

In this embodiment, when the first housing is in the folded state with respect to the second housing, the first supporting portion, the foldable supporting member, the hinge assembly, and the second supporting portion can cooperate with each other to provide continuous rigid support for the curved part of the flexible display, to keep the curved part of the flexible display in a relatively stable shape, and reduce a risk of collapsing or indentation when the curved part of the flexible display is subject to an external force.

In some embodiments, the foldable supporting member is made of an elastic metallic material. The foldable supporting member is in a planar shape or a grid shape. The first side portion is slidably connected to the first main housing portion, and the second side portion is slidably connected to the second main housing portion In this embodiment, the foldable supporting member can provide continuous, smooth, and relatively strong support for the flexible display, so that the flexible display looks and feels better.

According to a second aspect, an embodiment of this application further provides an electronic device, including a flexible display and the folding assembly in any one of the foregoing implementations. In this embodiment, when the electronic device is in a folded state, the folding assembly can provide support for a curved part of the flexible display, to reduce a risk of collapsing or indentation when the curved part of the flexible display is subject to an external force, so that the electronic device has higher reliability.

In some embodiments, the electronic device further includes a flexible circuit board. The flexible circuit board spans the first supporting portion and the second supporting portion, and two ends of the flexible circuit board are respectively accommodated on an inner side of the first main housing portion and an inner side of the second main housing portion. In this embodiment, the flexible circuit board of the electronic device is arranged in the wiring space of the folding assembly, to connect a component located on the inner side of the first main housing portion and a component located on the inner side of the second main housing portion.

### BRIEF DESCRIPTION OF DRAWINGS

FIG. 1 is a schematic diagram of a structure of an electronic device in an unfolded state according to an embodiment of this application;
FIG. 2 is a schematic diagram of a structure of the electronic device shown in FIG. 1 in a folded state;
FIG. 3 is a schematic exploded view of a partial structure of the electronic device shown in FIG. 1;
FIG. 4 is a front view of a partial structure of the electronic device shown in FIG. 1;
FIG. 5 is a sectional view of a partial structure of the electronic device shown in FIG. 1 at a line A1-A1;
FIG. 6 is a sectional view of a partial structure of the electronic device shown in FIG. 2 at a line A2-A2;
FIG. 7 is a sectional view of a partial structure of the electronic device shown in FIG. 1 at a line B1-B1;
FIG. 8 is a sectional view of a partial structure of the electronic device shown in FIG. 2 at a line B2-B2;
FIG. 9 is a schematic diagram of a structure of a folding assembly of the electronic device shown in FIG. 1 according to another embodiment;
FIG. 10 is a schematic diagram of a structure of a folding assembly of the electronic device shown in FIG. 1 according to still another embodiment;
FIG. 11 is a schematic diagram of a structure of a folding assembly of the electronic device shown in FIG. 1 according to still another embodiment;
FIG. 12 is a bottom view of a foldable supporting member shown in FIG. 11;
FIG. 13 is a sectional view of a partial structure of the electronic device shown in FIG. 1 at a line A1-A1 according to another embodiment;
FIG. 14 is a sectional view of a partial structure of the electronic device shown in FIG. 2 at a line A2-A2 according to another embodiment;
FIG. 15 is a schematic diagram of a structure of a folding assembly of the electronic device shown in FIG. 1 according to still another embodiment;
FIG. 16 is a sectional view of a partial structure of the electronic device shown in FIG. 1 at a line C1-C1 according to still another embodiment; and
FIG. 17 is a sectional view of a partial structure of the electronic device shown in FIG. 2 at a line C2-C2 according to still another embodiment.

### DESCRIPTION OF EMBODIMENTS

The following describes the embodiments of this application with reference to the accompanying drawings in the embodiments of this application. In the following description, although numerous features may be designated as optional, it is nevertheless acknowledged that all features defined by claim 1 are not to be read as optional.

An embodiment of this application provides an electronic device. The electronic device may be a foldable device such as a mobile phone, a tablet computer, a notebook computer, or a wearable display device.

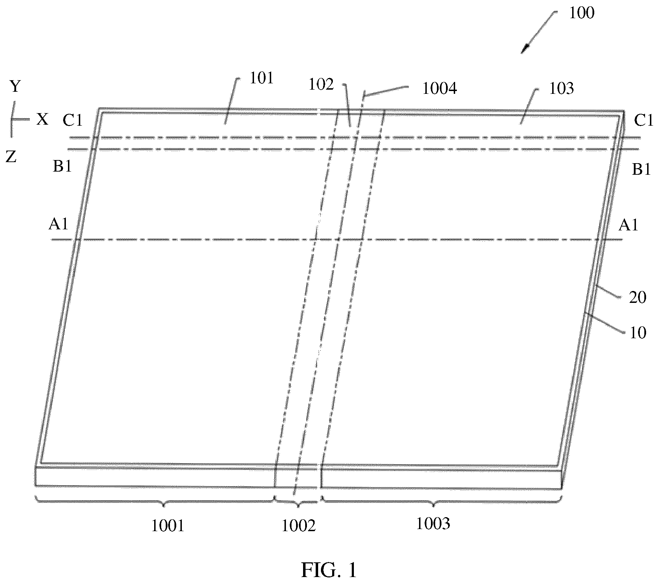

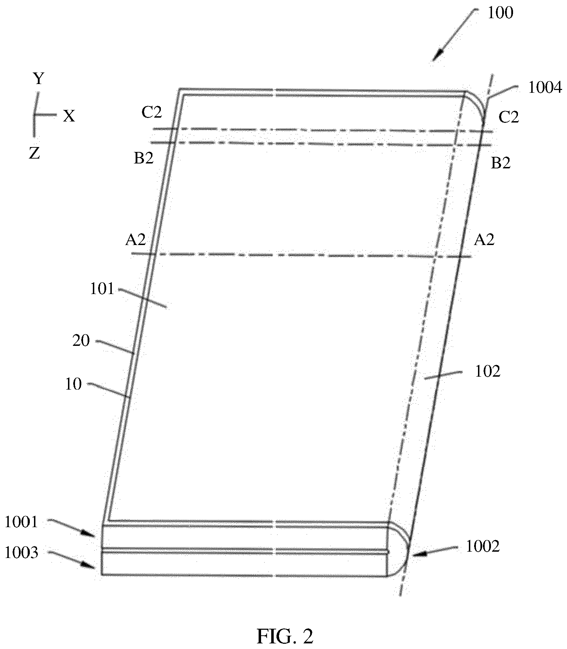

Refer to both FIG. 1 and FIG. 2. FIG. 1 is a schematic diagram of a structure of an electronic device 100 in an unfolded state according to an embodiment of this application. FIG. 2 is a schematic diagram of a structure of the electronic device 100 shown in FIG. 1 in a folded state. The electronic device 100 shown in FIG. 1 is described by using a mobile phone as an example.

The electronic device 100 includes a first planar region 1001, a bending region 1002, and a second planar region 1003 that are successively connected. The bending region 1002 is deformable so that the first planar region 1001 is unfolded or folded with respect to the second planar region 1003. As shown in FIG. 1, the first planar region 1001 is unfolded with respect to the second planar region 1003, and the electronic device 100 is in the unfolded state. As shown in FIG. 2, the second planar region 1003 is folded with respect to the second planar region 1003, and the electronic device 100 is in the folded state. When the bending region 1002 is deformed, the first planar region 1001 and the second planar region 1003 can rotate around a rotation axis 1004 of the bending region 1002. It is assumed that a width direction X of the electronic device 100 is perpendicular to the rotation axis 1004 of the bending region 1002, a length direction Y of the electronic device 100 is parallel to the rotation axis 1004 of the bending region 1002, and a thickness direction Z of the electronic device 100 is perpendicular to the width direction X and the length direction Y of the electronic device 100.

The electronic device 100 includes a flexible display 10 and a folding assembly 20. The flexible display 10 is mounted to the folding assembly 20. The flexible display 10 is configured to display an image, a video, and the like. The flexible display 10 can be bent. Two parts of the folding assembly 20 can rotate with respect to each other, to drive the flexible display 10 to be folded or unfolded. The electronic device 100 has a structure with an outward foldable screen. As shown in FIG. 2, when the electronic device 100 is in the folded state, the flexible display 10 is located on an outer side of the folding assembly 20, and is exposed outside the electronic device 100. A user can touch the flexible display 10 when the electronic device 100 is in the folded state.

The flexible display 10 includes a first flat part 101, a curved part 102, and a second flat part 103. The curved part 102 of the flexible display 10 is connected between the first flat part 101 of the flexible display 10 and the second flat part 103 of the flexible display 10. The first flat part 101 of the flexible display 10 is located in the first planar region 1001. The curved part 102 of the flexible display 10 is located in the bending region 1002. The second flat part 103 of the flexible display 10 is located in the second planar region 1003. As shown in FIG. 1, when the electronic device 100 is in the unfolded state, the first flat part 101, the curved part 102, and the second flat part 103 of the flexible display 10 may simultaneously perform display, to implement large-screen display and improve visual experience of the user. As shown in FIG. 2, when the electronic device 100 is in the folded state, a size of the electronic device 100 in the width direction X of the electronic device 100 is reduced, and the electronic device 100 is easy to store and carry. In this case, one or more of the first flat part 101 of the flexible display 10, the curved part 102 of the flexible display 10, and the second flat part (not shown in FIG. 2) of the flexible display 10 can perform display. For example, the curved part 102 of the flexible display 10 performs display to implement side display of the electronic device 100. The first flat part 101 of the flexible display 10 or the second flat part of the flexible display 10 performs display to implement single-sided display of the electronic device 100. The flexible display 10 may be integrated with a touch function. The electronic device 100 may wake up a corresponding part of the flexible display 10 in response to a gesture of touching the flexible display 10 by the user.

For example, the flexible display 10 may be an organic light-emitting diode (organic light-emitting diode, OLED) display, an active-matrix organic light-emitting diode (active-matrix organic light-emitting diode, AMOLED) display, a mini organic light-emitting diode (mini organic light-emitting diode) display, a micro light-emitting diode (micro organic light-emitting diode) display, a micro organic light-emitting diode (micro organic light-emitting diode) display, or a quantum dot light emitting diode (quantum dot light emitting diode, QLED) display.

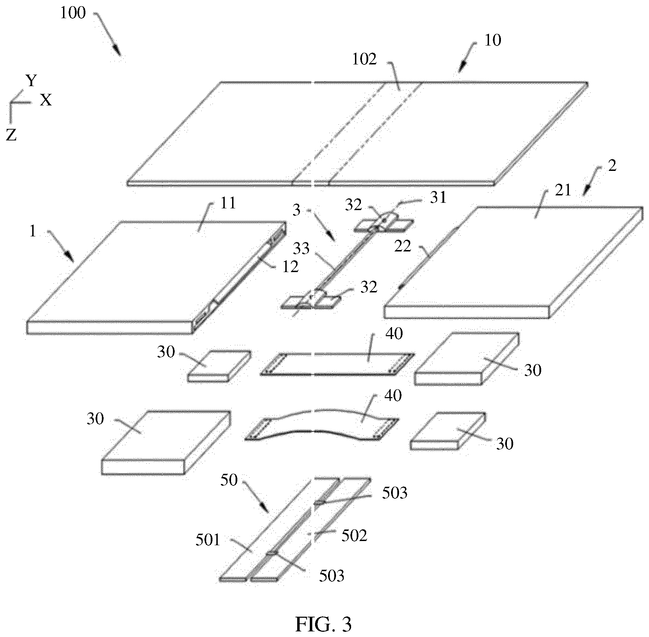

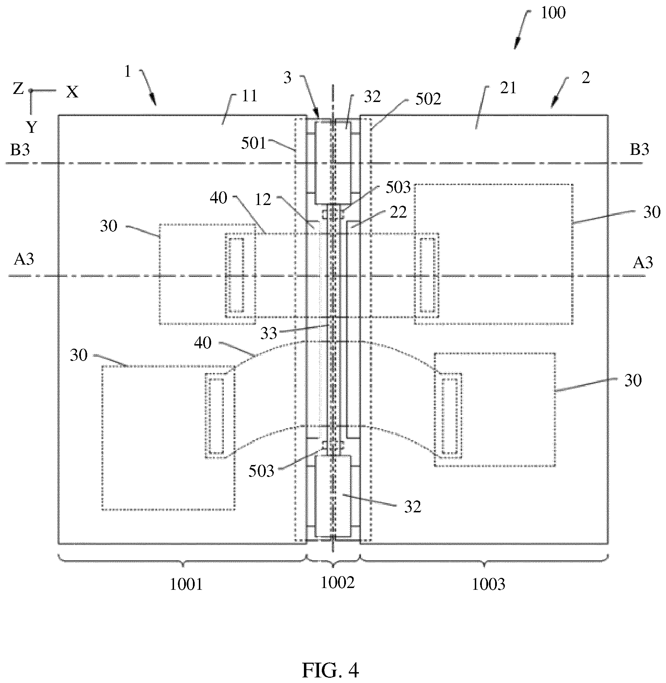

Refer to both FIG. 3 and FIG. 4. FIG. 3 is a schematic exploded view of a partial structure of the electronic device 100 shown in FIG. 1. FIG. 4 is a front view of a partial structure of the electronic device 100 shown in FIG. 1. A structure of the electronic device 100 in FIG. 4 corresponds to a structure of the electronic device 100 in FIG. 3.

The folding assembly 20 includes a first housing 1, a second housing 2, and a hinge assembly 3. The hinge assembly 3 is connected between the first housing 1 and the second housing 2. The hinge assembly 3 is deformable so that the first housing 1 is folded or unfolded with respect to the second housing 2. The first housing 1 and the second housing 2 can rotate around a rotation axis 31 of the hinge assembly 3. The rotation axis 31 of the hinge assembly 3 may coincide with the rotation axis 1004 (refer to FIG. 1) of the bending region 1002 of the electronic device 100.

The first housing 1 includes a first main housing portion 11 and a first supporting portion 12. The first supporting portion 12 is connected to a side, of the first main housing portion 11, that is close to the hinge assembly 3. The first main housing portion 11 is located in the first planar region 1001 of the electronic device 100. The first supporting portion 12 extends to the bending region 1002 of the electronic device 100. The second housing 2 includes a second main housing portion 21 and a second supporting portion 22. The second supporting portion 22 is connected to a side, of the second main housing portion 21, that is close to the hinge assembly 3. The second main housing portion 21 is located in the second planar region 1003 of the electronic device 100. The second supporting portion 22 extends to the bending region 1002 of the electronic device 100. In other words, the first supporting portion 12 and the second supporting portion 22 are located between the first main housing portion 11 and the second main housing portion 21.

In some embodiments, as shown in FIG. 3 and FIG. 4, the hinge assembly 3 may include one or more rotary members 32. In this embodiment of this application, "more" means at least two. Two ends of the rotary member 32 can rotate with respect to each other. Two ends of each rotary member 32 are respectively connected to the first main housing portion 11 and the second main housing portion 21. When the two ends of the rotary member 32 rotate with respect to each other, the first main housing portion 11 and the second main housing portion 21 synchronously rotate with respect to each other. This embodiment is described by using an example in which the hinge assembly 3 includes two rotary members 32. The two rotary members 32 are arranged at an interval, and an arrangement direction is parallel to the rotation axis 31 of the hinge assembly 3, so that the first housing 1 and the second housing 2 are subject to relatively balanced forces in a relative rotation process, and the rotation process is steadier. For example, the two rotary members 32 are respectively arranged at a top location and a bottom location in the bending region 1002 of the electronic device 100.

In some embodiments, as shown in FIG. 3 and FIG. 4, both the first supporting portion 12 and the second supporting portion 22 are arranged in a staggered manner with the rotary members 32. In this case, the first supporting portion 12, the second supporting portion 22, and the rotary members 32 have no stacking relationship in the thickness direction Z of the electronic device 100, and are substantially laid horizontally in the bending region 1002 of the electronic device 100, thereby helping reduce a thickness of the electronic device 100 in the bending region 1002 to implement thinning. In some embodiments, the first supporting portion 12 and the second supporting portion 22 are located between the two rotary members 32.

In some other embodiments, there may be one rotary member 32. The rotary member 32 is located in the middle of the bending region 1002 of the electronic device 100. The first supporting portion 12 is located on one side or two sides of the rotary member 32, and the second supporting portion 22 is located on one side or two sides of the rotary member 32.

In some other embodiments, there may be three rotary members 32. The three rotary members 32 are arranged at intervals, and an arrangement direction is parallel to the rotation axis 31 of the hinge assembly 3. The first supporting portion 12 and the second supporting portion 22 may be arranged between two adjacent rotary members 32.

In some embodiments, as shown in FIG. 3 and FIG. 4, the hinge assembly 3 further includes a connector 33. The hinge assembly 3 includes a plurality of rotary members 32. The plurality of rotary members 32 are arranged at intervals, and an arrangement direction is parallel to the rotation axis 31 of the hinge assembly 3. The connector 33 connects the plurality of rotary members 32. For example, there are two rotary members 32, and the connector 33 is connected between the two rotary members 32. In this case, the plurality of components of the hinge assembly 3 are assembled into an integrated structure, so that the hinge assembly 3 is steadier and firmer, and a rotational movement of the electronic device 100 during folding and unfolding is steadier and more reliable.

In some embodiments, as shown in FIG. 3 and FIG. 4, the connector 33 is in a strip shape. An extension direction of the connector 33 is parallel to or substantially parallel to the rotation axis 31 of the hinge assembly 3. Two ends of the connector 33 are respectively connected to the two rotary members 32. For example, the first supporting portion 12 and the second supporting portion 22 are located on two sides of the connector 33. The connector 33 has a relatively small volume and occupies a relatively small space. Therefore, with the first supporting portion 12 and the second supporting portion 22 disposed on the two sides of the connector 33, a risk of interference between the connector 33 and the first supporting portion 12 and the second supporting portion 22 can be reduced, and space utilization of the bending region 1002 of the electronic device 100 can also be improved, thereby facilitating thinning of the electronic device 100.

In some other embodiments, when there are more than three (including three) rotary members 32, the connector 33 may have an integrated structure, and the connector 33 connects all the rotary members 32; or the connector 33 may have a split structure and includes a plurality of connecting portions, and two adjacent connectors 33 are connected by using a connecting portion, so that a plurality of connectors 33 are connected in series into an integrated structure. In this case, the first supporting portion 12 and the second supporting portion 22 may also have a multi-section structure, and a plurality of sections of the first supporting portion 12 and a plurality of sections of the second supporting portion 22 are correspondingly disposed on two sides of the plurality of connecting sections respectively.

In still some other embodiments, a difference from the foregoing embodiment lies in that the connector 33 may alternatively not be disposed for the hinge assembly 3, and the plurality of rotary members 32 of the hinge assembly 3 are disposed independently of each other. In this case, if a rotary member 32 in the hinge assembly 3 is faulty, only the faulty rotary member 32 needs to be repaired or replaced, so that maintenance costs of the electronic device 100 are relatively low, and efficiency is relatively high.

In some embodiments, as shown in FIG. 3 and FIG. 4, the electronic device 100 further includes a plurality of components 30. The plurality of components 30 are accommodated on inner sides of the first main housing portion 11 and the second main housing portion 21. The plurality of components 30 are arranged in the first main housing portion 11 and the second main housing portion 21 in a plurality of manners. This is not strictly limited in this application. The plurality of components 30 may include more than one of a circuit board, a processor, a memory, a battery, a camera module, a sensor module, an audio module, a fingerprint module, a wireless communications module, a mobile communications module, a motor module, and the like. The processor and the memory may be fastened to the circuit board. Modules such as the flexible display 10, the memory, the battery, and the camera module are coupled to the processor.

In some embodiments, as shown in FIG. 3 and FIG. 4, the electronic device 100 may further include a flexible circuit board 40. The flexible circuit board 40 extends from the first housing 1 to the second housing 2. The flexible circuit board 40 is configured to electrically connect two components 30 respectively located in the first main housing portion 11 and the second main housing portion 21. For example, the flexible circuit board 40 electrically connects a first circuit board located in the first main housing portion 11 to a second circuit board located in the second main housing portion 21. There may be one or more flexible circuit boards 40.

In some embodiments, as shown in FIG. 3 and FIG. 4, the folding assembly 20 further includes a first sliding plate 501, a second sliding plate 502, and a rotary connector 503. The first sliding plate 501, the second sliding plate 502, and the rotary connector 503 constitute a sliding plate assembly 50. The rotary connector 503 is connected between the first sliding plate 501 and the second sliding plate 502. The rotary connector 503 is deformable so that the first sliding plate 501 is folded or unfolded with respect to the second sliding plate 502. The first sliding plate 501 is slidably connected to the first main housing portion 11. The second sliding plate 502 is slidably connected to the second main housing portion 21. When the first housing 1 is unfolded with respect to the second housing 2, the first sliding plate 501 is unfolded with respect to the second sliding plate 502. When the first housing 1 is folded with respect to the second housing 2, the first sliding plate 501 is folded with respect to the second sliding plate 502. The sliding plate assembly 50 is located on a side, of the flexible circuit board 40 and the hinge assembly 3, that is away from the flexible display 10. In other words, the flexible circuit board 40 and the hinge assembly 3 are located between the sliding plate assembly 50 and the flexible display 10, and are hidden and protected as internal structures of the electronic device 100.

For example, as shown in FIG. 3 and FIG. 4, the rotary connector 503 and the connector 33 of the hinge assembly 3 are arranged in a staggered manner. For example, the rotary connector 503 is arranged between two connectors 33. There may be one or more rotary connectors 503. For example, there are two rotary connectors 503. The two rotary connectors 503 are arranged at an interval, and an arrangement direction is parallel to the rotation axis 31 of the hinge assembly 3. In this case, a movement of folding or unfolding the first sliding plate 501 and the second sliding plate 502 by using the rotary connector 503 is steadier.

In some other embodiments, a difference from the foregoing embodiment lies in that the sliding plate assembly 50 is not disposed for the electronic device 100. The electronic device 100 includes a deformable shielding member. One end of the shielding member is connected to the first main housing portion 11, and the other end of the shielding member is connected to the second main housing portion 21. The two ends of the shielding member can be bent with respect to each other. For example, the shielding member may be an elastic plate or a flexible plate, and includes a plurality of foldable parts. The shielding member is deformed through an unfolding or folding movement of the plurality of foldable parts.

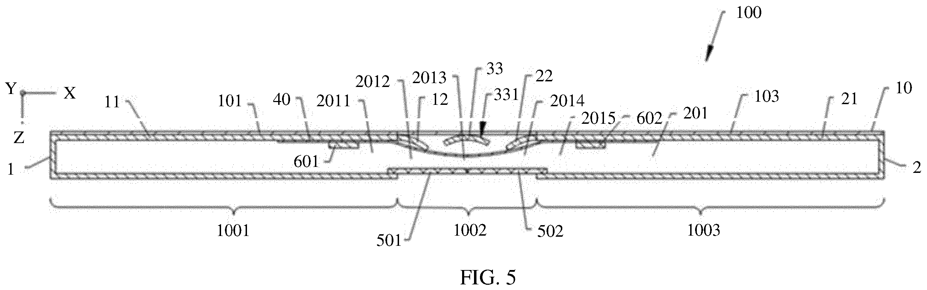

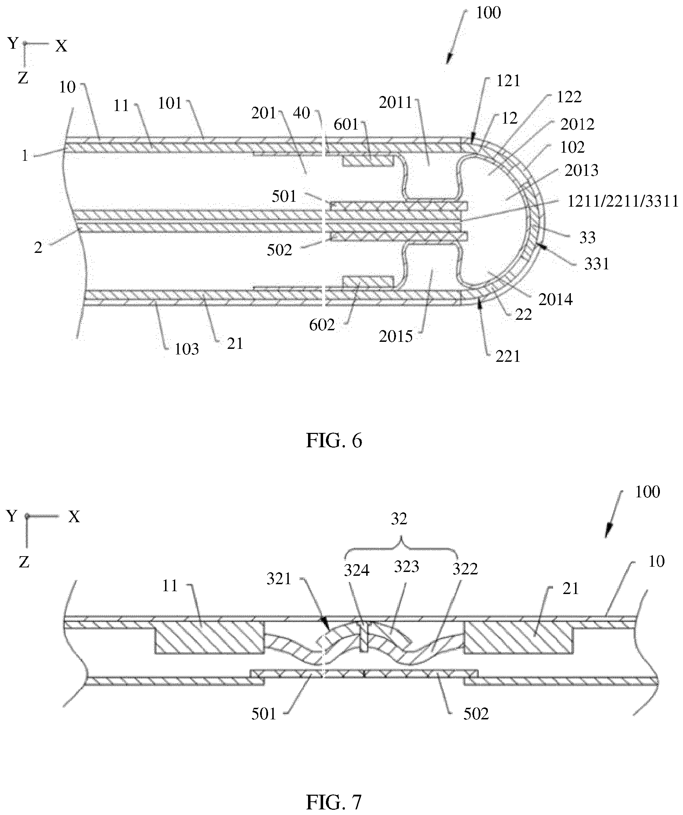

Refer to both FIG. 5 and FIG. 6. FIG. 5 is a sectional view of a partial structure of the electronic device 100 shown in FIG. 1 at a line A1-A1. FIG. 6 is a sectional view of a partial structure of the electronic device 100 shown in FIG. 2 at a line A2-A2. A plane on which the line A1-A1 in FIG. 1 is located and a plane on which the line A2-A2 in FIG. 2 is located are a same plane. A plane on which a line A3-A3 in FIG. 4 is located and the plane on which the line A1-A1 in FIG. 1 is located are also a same plane.

As shown in FIG. 5 and FIG. 6, the first main housing portion 11 is configured to support the first flat part 101 of the flexible display 10. The second main housing portion 21 is configured to support the second flat part 103 of the flexible display 10. In this case, the first main housing portion 11 provides support for the first flat part 101 of the flexible display 10, and the second main housing portion 21 provides support for the second flat part 103 of the flexible display 10. Therefore, when the first flat part 101 and the second flat part 103 of the flexible display 10 are subject to an external force (for example, touching by the user or accidental collision), a risk of collapsing or indentation is relatively low, and the flexible display 10 has relatively high reliability and a relatively long service life. It can be understood that the support provided by the first main housing portion 11 for the first flat part 101 of the flexible display 10 may be direct support (for example, support through contact) or indirect support (for example, support by using an intermediate mechanical part). Similarly, the support provided by the second main housing portion 21 for the second flat part 103 of the flexible display 10 may be direct support or indirect support.

As shown in FIG. 6, when the first housing 1 is in a folded state with respect to the second housing 2, the first supporting portion 12 and the second supporting portion 22 are configured to jointly support the curved part 102 of the flexible display 10. It can be understood that the support provided by the first supporting portion 12 and the second supporting portion 22 for the curved part 102 of the flexible display 10 may be direct support or indirect support. When the electronic device 100 is in the folded state, the first housing 1 is in the folded state with respect to the second housing 2.

In this embodiment, when the first housing 1 is in the folded state with respect to the second housing 2, the first supporting portion 12 and the second supporting portion 22 can jointly support the curved part 102 of the flexible display 10, to help keep the curved part 102 of the flexible display 10 in a relatively stable shape. Therefore, when the curved part 102 of the flexible display 10 is subject to an external force (for example, the user performs an operation, such as pressing or touching, on the curved part 102 of the flexible display 10, or the user holds the electronic device 100 and applies a force to the curved part 102 of the flexible display 10), a risk of collapsing or indentation is relatively low, the flexible display 10 has relatively high reliability and a relatively long service life, and the flexible display 10 also looks and feels better.

In some embodiments, as shown in FIG. 6, the first supporting portion 12 has a first supporting surface 121. The second supporting portion 22 has a second supporting surface 221. When the first housing 1 is in the folded state with respect to the second housing 2, the first supporting surface 121 and the second supporting surface 221 are configured to jointly support the curved part 102 of the flexible display 10. Both the first supporting surface 121 and the second supporting surface 221 are arc surfaces. When the first housing 1 is in the folded state with respect to the second housing 2, a center line 1211 of the first supporting surface 121 coincides with a center line 2211 of the second supporting surface 221. In this case, the first supporting surface 121 and the second supporting surface 221 can continuously and smoothly support the curved part 102 of the flexible display 10, achieving a better supporting effect.

For example, a radius of the first supporting surface 121 is equal to a radius of the second supporting surface 221. In this case, a surface on which the first supporting surface 121 is located coincides with a surface on which the second supporting surface 221 is located, and the first supporting surface 121 and the second supporting surface 221 can directly support the curved part 102 of the flexible display 10, or indirectly support the curved part 102 of the flexible display 10 by using an equi-thickness intermediate mechanical part. In another example, the radius of the first supporting surface 121 may alternatively not be equal to the radius of the second supporting surface 221. In this case, the first supporting surface 121 and the second supporting surface 221 can indirectly support the curved part 102 of the flexible display 10 by using an intermediate mechanical part with unequal thicknesses. This is not strictly limited in this application.

In this embodiment of this application, shapes of the first supporting surface 121 and the second supporting surface 221 may be designed through profile modeling based on a shape of the curved part 102 of the flexible display 10 when the first housing 1 is in the folded state with respect to the second housing 2. Therefore, when the first housing 1 is in the folded state with respect to the second housing 2, the first supporting surface 121 and the second supporting surface 221 can provide profiling support for the curved part 102 of the flexible display 10, achieving a better supporting effect. This reduces a risk of collapsing or indentation when the curved part 102 of the flexible display 10 is subject to an external force, and improves reliability and a service life of the flexible display 10.

In some embodiments, as shown in FIG. 6, when the first housing 1 is in the folded state with respect to the second housing 2, the curved part 102 of the flexible display 10 may be in a semicircular shape. The first supporting surface 121 and the second supporting surface 221 may be circular arc surfaces. In this case, when the first housing 1 is in the folded state with respect to the second housing 2, a center of the first supporting surface 121 coincides with a center of the second supporting surface 221, and the first supporting surface 121 and the second supporting surface 221 are located on one cylindrical surface.

In some other embodiments, when the first housing 1 is in the folded state with respect to the second housing 2, the curved part 102 of the flexible display 10 may be in a semi-elliptic shape. The first supporting surface 121 and the second supporting surface 221 may be elliptic arc surfaces. In this case, when the first housing 1 is in the folded state with respect to the second housing 2, a center of the first supporting surface 121 coincides with a center of the second supporting surface 221, and the first supporting surface 121 and the second supporting surface 221 are located on one elliptic cylindrical surface.

In some other embodiments, the curved part 102 of the flexible display 10 may be alternatively disposed in another shape. For example, the curved part 102 of the flexible display 10 may alternatively include a planar section and two cambered sections, one cambered section is connected between the first flat part 101 of the flexible display 10 and the planar section, and the other cambered section is connected between the second flat part 103 of the flexible display 10 and the planar section. The first supporting surface 121 and the second supporting surface 221 are disposed based on the shape of the curved part 102 of the flexible display 10 in the folded state. The shape of the curved part 102 of the flexible display 10 is not strictly limited in this application.

In some embodiments, as shown in FIG. 5 and FIG. 6, the folding assembly 20 has a wiring space 201. The wiring space 201 is used for routing wires such as the flexible circuit board 40 of the electronic device 100. The wires of the electronic device 100 may further include a coaxial line configured to transmit an antenna signal, and the like. This embodiment is described by using an example in which the flexible circuit board 40 of the electronic device 100 is arranged in the wiring space 201.

The wiring space 201 includes a first cavity 2011, a first space 2012, a connection space 2013, a second space 2014, and a second cavity 2015 that are successively connected. The first cavity 2011 is located in the first main housing portion 11. The first space 2012 corresponds to the first supporting portion 12. The first supporting portion 12 forms a part of a wall surface of the first space 2012. The second space 2014 corresponds to the second supporting portion 22. The second supporting portion 22 forms a part of a wall surface of the second space 2014. The second cavity 2015 is located in the second main housing portion 21. The first cavity 2011 is located in the first planar region 1001 of the electronic device 100. The connection space 2013 is located in the bending region 1002 of the electronic device 100. The first space 2012 connects the first cavity 2011 and the connection space 2013, and is substantially at a location, in the bending region 1002 of the electronic device 100, that is close to the first planar region 1001. A location of the first space 2012 changes with a location of the first supporting portion 12. The second cavity 2015 is located in the second planar region 1003 of the electronic device 100. The second space 2014 connects the second cavity 2015 and the connection space 2013, and is substantially at a location, in the bending region 1002 of the electronic device 100, that is close to the second planar region 1003. A location of the second space 2014 changes with a location of the second supporting portion 22.

In this embodiment, the flexible circuit board 40 spans the first supporting portion 12 and the second supporting portion 22, and two ends of the flexible circuit board 40 are respectively accommodated on an inner side of the first main housing portion 11 and an inner side of the second main housing portion 21. Because the first supporting portion 12 and the second supporting portion 22 are housing structures of the electronic device 100, when the first supporting portion 12 and the second supporting portion 22 are capable of supporting the curved part 102 of the flexible display 10, the first supporting portion 12 and the second supporting portion 22 can be disposed into a structure with a relatively small volume to reduce spaces occupied by the first supporting portion 12 and the second supporting portion 22, so that sufficient spaces can be reserved near the first supporting portion 12 and the second supporting portion 22 (for example, spaces under the first supporting portion 12 and the second supporting portion 22) as a part of the wiring space 201. Therefore, the flexible circuit board 40 of the electronic device 100 can extend from the first main housing portion 11 to the second main housing portion 21 through the wiring space 201 to implement signal transmission.

For example, as shown in FIG. 5 and FIG. 6, the first supporting portion 12 and the second supporting portion 22 are disposed into an arc arm-like structure to reduce volumes and occupied spaces. For example, the first supporting portion 12 further includes a first inner side surface 122. The first inner side surface 122 backs the first supporting surface 121. A distance between the first inner side surface 122 and the first supporting surface 121 is a thickness of the first supporting portion 12, and the first supporting portion 12 is in an equi-thickness structure. In this case, the first supporting portion 12 is substantially in a bent plate-like structure. A structure of the second supporting portion 22 is arranged with reference to the structure of the first supporting portion 12. In some other embodiments, the first supporting portion 12 and the second supporting portion 22 may be alternatively disposed into another structure.

It can be understood that, with reference to FIG. 3 and FIG. 4, the rotary member 32 of the hinge assembly 3 has a relatively large volume and requires a relatively large rotation space. Therefore, the wiring space 201 and the rotary member 32 are arranged in a staggered manner, and locations of the wiring space 201 and the rotary member 32 in the bending region 1002 of the electronic device 100 are different, so that an overall thickness of the bending region 1002 of the electronic device 100 can be set to a relatively small value, thereby facilitating thinning of the electronic device 100.

For example, as shown in FIG. 5 and FIG. 6, the first space 2012 is formed between the first supporting portion 12 and the first sliding plate 501. The second space 2014 is formed between the second supporting portion 22 and the second sliding plate 502. Because both the first supporting portion 12 and the first sliding plate 501 may be disposed into a structure with a relatively small thickness, a volume of the first space 2012 is relatively large. Similarly, because both the second supporting portion 22 and the second sliding plate 502 may be disposed into a structure with a relatively small thickness, a volume of the second space 2014 is relatively large. Therefore, the wiring space 201 is relatively large, and can provide a sufficient space for routing and deformation of the flexible circuit board 40. In some other embodiments, when the sliding plate assembly 50 is not disposed for the electronic device 100 and the shielding member is disposed, the first space 2012 is formed between the shielding member and the first supporting portion 12, and the second space 2014 is formed between the shielding member and the second supporting portion 22. In this case, a structure with a relatively small volume is also used for the shielding member as far as possible, so that volumes of the first space 2012 and the second space 2014 are relatively large.

For example, as shown in FIG. 5 and FIG. 6, the connection space 2013 is formed between the connector 33 and the first sliding plate 501 and second sliding plate 502. In this case, the flexible circuit board 40 successively passes through the space between the first supporting portion 12 and the first sliding plate 501, the space between the connector 33 and the first sliding plate 501 and second sliding plate 502, and the space between the second supporting portion 22 and the second sliding plate 502. Because the connector 33 has a relatively small volume, the connection space 2013 has a relatively large volume, and the wiring space 201 can provide a sufficient space for routing and deformation of the flexible circuit board 40. In some other embodiments, the connector 33 is not disposed for the electronic device 100. In this case, the connection space 2013 is formed between the curved part 102 of the flexible display 10 and the first sliding plate 501 and second sliding plate 502. In some other embodiments, when the sliding plate assembly 50 is not disposed for the electronic device 100 and the shielding member is disposed, the connection space 2013 is formed between the shielding member and the connector 33 or the curved part 102 of the flexible display 10.

In some embodiments, as shown in FIG. 5 and FIG. 6, the connector 33 has a third supporting surface 331. The third supporting surface 331 is located on a side, of the connector 33, that is far away from the first sliding plate 501 and the second sliding plate 502. The third supporting surface 331 is configured to support the curved part 102 of the flexible display 10. In this embodiment, the connector 33 supports the curved part 102 of the flexible display 10 by using the third supporting surface 331, to reduce a risk of collapsing or indentation when the curved part 102 of the flexible display 10 is subject to an external force.

As shown in FIG. 6, when the first housing 1 is in the folded state with respect to the second housing 2, the first supporting portion 12, the second supporting portion 22, and the connector 33 can jointly support the curved part 102 of the flexible display 10, and an area of a supporting surface of the folding assembly 20 for the flexible display 10 is relatively large. This can help keep the curved part 102 of the flexible display 10 in a relatively stable shape, to reduce a risk of collapsing or indentation when the curved part 102 of the flexible display 10 is subject to an external force.

For example, as shown in FIG. 6, the third supporting surface 331 is an arc surface. When the first housing 1 is in the folded state with respect to the second housing 2, a center line 3311 of the third supporting surface 331 coincides with the center line 1211 of the first supporting surface 121. In this case, the first supporting surface 121, the second supporting surface 221, and the third supporting surface 331 jointly support the curved part 102 of the flexible display 10. A total area of the plurality of supporting surfaces configured to support the curved part 102 of the flexible display 10 is larger, and the supporting surfaces have good uniformity and can provide continuous and smooth support for the curved part 102 of the flexible display 10 in the folded state, so that the curved part 102 of the flexible display 10 feels better and has higher reliability.

For example, a radius of the third supporting surface 331 is equal to the radius of the first supporting surface 121. In this case, a surface on which the third supporting surface 331 is located coincides with a surface on which the first supporting surface 121 is located, and the third supporting surface 331 and the first supporting surface 121 can directly support the curved part 102 of the flexible display 10, or indirectly support the curved part 102 of the flexible display 10 by using an equi-thickness intermediate mechanical part. In another example, the radius of the third supporting surface 331 may alternatively not be equal to the radius of the first supporting surface 121. In this case, the third supporting surface 331 and the first supporting surface 121 can indirectly support the curved part 102 of the flexible display 10 by using an intermediate mechanical part with unequal thicknesses. This is not strictly limited in this application.

It can be understood that a shape of the third supporting surface 331 may be designed through profile modeling based on the shape of the curved part 102 of the flexible display 10 when the first housing 1 is in the folded state with respect to the second housing 2, to achieve a better profiling support effect.

For example, as shown in FIG. 5 and FIG. 6, the folding assembly 20 further includes a first fixture 601 and a second fixture 602. The flexible circuit board 40 includes a first fixing region, a deformation region, and a second fixing region that are successively connected. The first fixture 601 is accommodated in the first cavity 2011. The first fixture 601 is configured to fasten the first fixing region of the flexible circuit board 40 to the first main housing portion 11. The second fixture 602 is accommodated in the second cavity 2015. The second fixture 602 is configured to fasten the second fixing region of the flexible circuit board 40 to the second main housing portion 21.

In this embodiment, the first fixing region of the flexible circuit board 40 is fastened to the first main housing portion 11, and the second fixing region of the flexible circuit board 40 is fastened to the second main housing portion 21. Therefore, when the deformation region of the flexible circuit board 40 is deformed in a process in which the first housing 1 rotates with respect to the second housing 2, the flexible circuit board 40 can move in a preset region, to avoid faults such as displacement and detaching.

For example, the first fixture 601 and the second fixture 602 may each be an adhesive material, or may be a fastener, a snap-fit mechanical part, or the like. This is not strictly limited in this application.

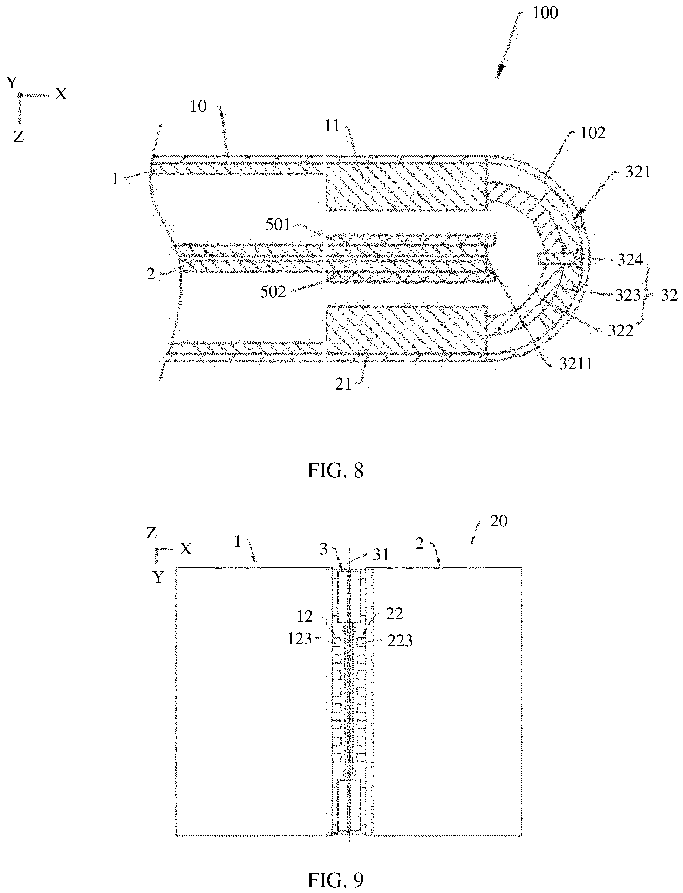

Refer to FIG. 7 and FIG. 8. FIG. 7 is a sectional view of a partial structure of the electronic device 100 shown in FIG. 1 at a line B1-B1. FIG. 8 is a sectional view of a partial structure of the electronic device 100 shown in FIG. 2 at a line B2-B2. A plane on which the line B1-B1 in FIG. 1 is located and a plane on which the line B2-B2 in FIG. 2 is located are a same plane. A plane on which a line B3-B3 in FIG. 4 is located and the plane on which the line B1-B1 in FIG. 1 is located are also a same plane.

In some embodiments, the two ends of the rotary member 32 are respectively connected to the first main housing portion 11 and the second main housing portion 21. The rotary member 32 may have a structure capable of relative folding and unfolding, for example, a hinge structure, a connecting rod structure, or a gear meshing structure. A specific structure of the rotary member 32 is not strictly limited in this application.

In some embodiments, as shown in FIG. 7 and FIG. 8, the rotary member 32 has a fourth supporting surface 321. The fourth supporting surface 321 is located on a side, of the rotary member 32, that is far away from the first sliding plate 501 and the second sliding plate 502. The fourth supporting surface 321 is configured to support the curved part 102 of the flexible display 10. In this embodiment, the rotary member 32 supports the curved part 102 of the flexible display 10 by using the fourth supporting surface 321, to reduce a risk of collapsing or indentation when the curved part 102 of the flexible display 10 is subject to an external force.

For example, as shown in FIG. 8, the fourth supporting surface 321 is an arc surface. When the first housing 1 is in the folded state with respect to the second housing 2, a center line 3211 of the fourth supporting surface 321 and the center line 1211 (refer to FIG. 6) of the first supporting surface 121 are a same line. In this case, the first supporting surface 121, the second supporting surface 221 (refer to FIG. 6), and the fourth supporting surface 321 jointly support the curved part 102 of the flexible display 10. A total area of the plurality of supporting surfaces configured to support the curved part 102 of the flexible display 10 is larger, and the supporting surfaces have good uniformity and can provide continuous and smooth support for the curved part 102 of the flexible display 10 in the folded state, to help keep the curved part 102 of the flexible display 10 in a relatively stable shape and reduce a risk of collapsing or indentation when the curved part 102 of the flexible display 10 is subject to an external force, so that the curved part 102 of the flexible display 10 feels better and has higher reliability.

For example, a radius of the fourth supporting surface 321 is equal to the radius of the first supporting surface 121 (refer to FIG. 6). In this case, a surface on which the first supporting surface 121 is located coincides with a surface on which the fourth supporting surface 321 is located, and the first supporting surface 121 and the fourth supporting surface 321 can directly support the curved part 102 of the flexible display 10, or indirectly support the curved part 102 of the flexible display 10 by using an equi-thickness intermediate mechanical part. In another example, the radius of the fourth supporting surface 321 may alternatively not be equal to the radius of the first supporting surface 121. In this case, the first supporting surface 121 and the fourth supporting surface 321 can indirectly support the curved part 102 of the flexible display 10 by using an intermediate mechanical part with unequal thicknesses. This is not strictly limited in this application.

It can be understood that a shape of the fourth supporting surface 321 may be designed through profile modeling based on the shape of the curved part 102 of the flexible display 10 when the first housing 1 is in the folded state with respect to the second housing 2, to achieve a better profiling support effect.

In some embodiments, as shown in FIG. 7 and FIG. 8, the rotary member 32 includes a rotating body 322 and a supporting member 323. The supporting member 323 may have a rigid structure. The supporting member 323 is connected to a middle part of the rotating body 322, for example, a fastener 324 may be used for connection. The supporting member 323 is located between the rotating body 322 and the flexible display 10. A surface, of the supporting member 323, that is away from the rotating body 322 is the fourth supporting surface 321. The supporting member 323 may have a substantially arc plate-like structure.

In the foregoing embodiment, as shown in FIG. 7, because the fourth supporting surface 321 of the supporting member 323 has a relatively large area, the supporting member 323 occupies a relatively large space. When the first housing 1 is in an unfolded state with respect to the second housing 2, the supporting member 323 limits a location of the rotating body 322. A part, of the rotating body 322, that is in contact with an inner side of the supporting member 323 remains in a same shape as that of the inner side of the supporting member 323, and a movement space of the rotating body 322 is limited to some extent. In some other embodiments, the supporting member 323 is provided with several notches. When the first housing 1 is in the unfolded state with respect to the second housing 2, the rotating body 322 is partially embedded into the notch, thereby reducing the limitation of the supporting member 323 on the movement space of the rotating body 322, so that the rotating body 322 is more flexible during rotation of the folding assembly 20, and a structural design of the rotary member 32 can be more diversified.

In some other embodiments, a difference from the foregoing embodiment lies in that the supporting member 323 is not disposed for the rotary member 32. By virtue of a structure of the rotating body 322 of the rotary member 32, when the first housing 1 is in the unfolded state with respect to the second housing 2, the rotating body 322 of the rotary member 32 supports the curved part 102 of the flexible display 10 by using a plane; or when the first housing 1 is in the folded state with respect to the second housing 2, the rotating body 322 of the rotary member 32 supports the curved part 102 of the flexible display 10 by using an arc surface.

In this embodiment of this application, the first supporting portion 12 and the second supporting portion 22 may be implemented in a plurality of manners. An example is as follows:

In some embodiments, as shown in FIG. 3 and FIG. 4, the first supporting portion 12 is in a long strip shape. An extension direction of the first supporting portion 12 is parallel to the rotation axis 31 of the hinge assembly 3. The first supporting portion 12 continuously supports the curved part 102 of the flexible display 10 in the direction parallel to the rotation axis 31 of the hinge assembly 3, achieving a relatively large supporting area and a relatively good supporting effect.

For example, the second supporting portion 22 is in a long strip shape. An extension direction of the first supporting portion 12 is parallel to the rotation axis 31 of the hinge assembly 3. The second supporting portion 22 continuously supports the curved part 102 of the flexible display 10 in the direction parallel to the rotation axis 31 of the hinge assembly 3, achieving a relatively large supporting area and a relatively good supporting effect. For example, the first supporting portion 12 and the second supporting portion 22 are symmetrically disposed.

For example, several vias or grooves (not shown in the figure) arranged at intervals may be provided on the first supporting portion 12, to reduce mass of the first supporting portion 12, and facilitate thinning of the electronic device 100. When a groove is provided on the first supporting portion 12, an opening of the groove is located on a side, of the first supporting portion 12, that backs the flexible display 10. A shape of the second supporting portion 22 is arranged with reference to the first supporting portion 12.

In some other embodiments, refer to FIG. 9. FIG. 9 is a schematic diagram of a structure of the folding assembly 20 of the electronic device 100 shown in FIG. 1 according to another embodiment. A difference between this embodiment and the foregoing embodiment lies in that the first supporting portion 12 includes a plurality of first supporting blocks 123 arranged at intervals. An arrangement direction of the plurality of first supporting blocks 123 is parallel to the rotation axis 31 of the hinge assembly 3. In this case, when the first housing 1 is in the folded state with respect to the second housing 2, the first supporting portion 12 can support the curved part (not shown in the figure) of the flexible display, and has relatively small mass, thereby facilitating thinning of the electronic device 100.

For example, the plurality of first supporting blocks 123 are arranged at equal spacings. In a direction parallel to the rotation axis 31 of the hinge assembly 3, a spacing between two adjacent first supporting blocks 123 is less than lengths of the first supporting blocks 123. In this case, the first supporting portion 12 can well support the curved part of the flexible display. Lengths of all of the plurality of first supporting blocks 123 may be the same or different. It can be understood that specific sizes of the spacing between two adjacent first supporting blocks 123 and the lengths of the first supporting blocks 123 may be designed based on a specific product size, so that the bending region 1002 (refer to FIG. 1) of the electronic device 100 in the folded state is not likely to collapse or be indented in a process of using the electronic device 100. In another embodiment, the plurality of first supporting blocks 123 may alternatively not be arranged at equal spacings. This is not strictly limited in this application.

For example, the second supporting portion 22 includes a plurality of second supporting blocks 223 arranged at intervals. An arrangement direction of the plurality of second supporting blocks 223 are parallel to the rotation axis 31 of the hinge assembly 3. The plurality of second supporting blocks 223 directly face the plurality of first supporting blocks 123 one by one.

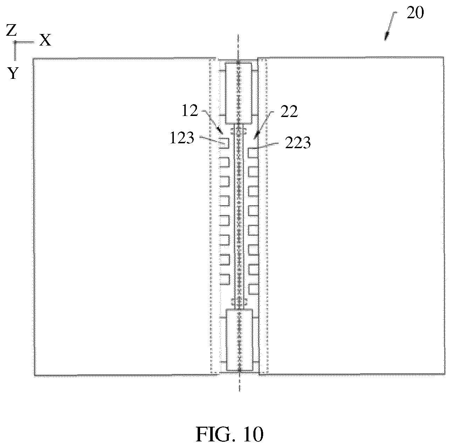

In still some other embodiments, refer to FIG. 10. FIG. 10 is a schematic diagram of a structure of the folding assembly 20 of the electronic device 100 shown in FIG. 1 according to still another embodiment. A difference between this embodiment and the foregoing embodiment lies in that the plurality of second supporting blocks 223 of the second supporting portion 22 and the plurality of first supporting blocks 123 of the first supporting portion 12 are arranged in a staggered manner. To be specific, a second supporting block 223 directly faces a gap between two adjacent first supporting blocks 123, and a first supporting block 123 directly faces a gap between two adjacent second supporting blocks 223. In this case, after the first supporting portion 12 and the second supporting portion 22 are fit, regions in which the first supporting portion and the second supporting portion support the curved part of the flexible display are arranged more evenly, thereby helping reduce a risk of collapsing or indentation when the curved part of the flexible display is subject to an external force.

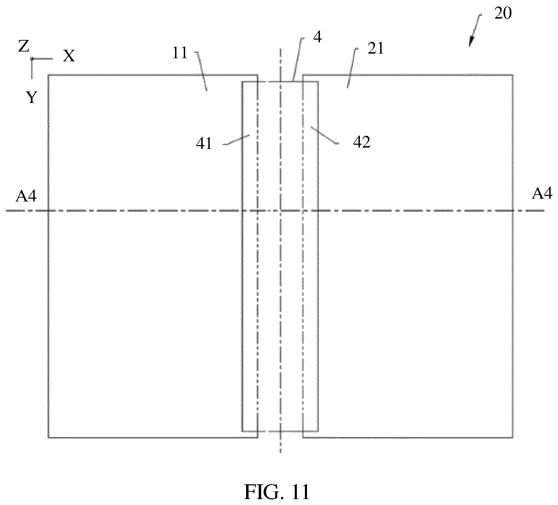

In some embodiments, refer to FIG. 11. FIG. 11 is a schematic diagram of a structure of the folding assembly 20 of the electronic device 100 shown in FIG. 1 according to still another embodiment. A difference between this embodiment and the foregoing embodiment lies in that the folding assembly 20 further includes a foldable supporting member 4. The foldable supporting member 4 includes a first side portion 41 and a second side portion 42 away from the first side portion 41. The foldable supporting member 4 is deformable so that the first side portion 41 is folded or unfold with respect to the second side portion 42. The first side portion 41 is connected to the first main housing portion 11. The second side portion 42 is connected to the second main housing portion 21.

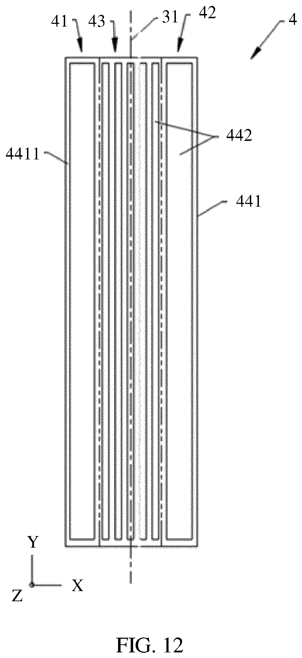

For example, FIG. 12 is a bottom view of the foldable supporting member 4 shown in FIG. 11. The foldable supporting member 4 includes a flexible substrate 441 and a plurality of supporting bars 442 fastened to the flexible substrate 441 at intervals. In this embodiment, the flexible substrate 441 enables the foldable supporting member 4 to have specific flexibility, so that a maximum bending angle of the foldable supporting member 4 can meet a folding requirement of the folding assembly 20. Because the supporting bars 442 can increase rigidity of the foldable supporting member 4, the foldable supporting member 4 has good supporting performance.

For example, rigidity of the supporting bars 442 is higher than that of the flexible substrate 441. The supporting bars 442 may be made of a metallic material such as stainless steel or an aluminum alloy, or may be made of hard plastics such as polyvinyl chloride (polyvinyl chloride, PVC). The flexible substrate 441 may be made of a silicone gel material with relatively high flexibility.

For the supporting bars 442, for example, as shown in FIG. 12, an extension direction of each supporting bar 442 is parallel to the rotation axis 31 of the hinge assembly 3. An arrangement direction of the plurality of supporting bars 442 is perpendicular to the rotation axis 31 of the hinge assembly 3. Arrangement density of the plurality of supporting bars 442 is designed according to a supporting strength requirement and a bending angle requirement of the folding assembly 20. This is not strictly limited in this application.

For example, as shown in FIG. 12, the foldable supporting member 4 further includes a foldable middle portion 43 located between the first side portion 41 and the second side portion 42. The plurality of supporting bars 442 are arranged on the first side portion 41, the foldable middle portion 43, and the second side portion 42. A width (a size in the width direction X of the electronic device 100) of a supporting bar 442 arranged on the foldable middle portion is less than a width (a size in the width direction X of electronic device 100) of supporting bars 442 arranged on the first side portion 41 and the second side portion 42. A plurality of supporting bars 442 arranged on the foldable middle portion have equal widths and are arranged at equal spacings.

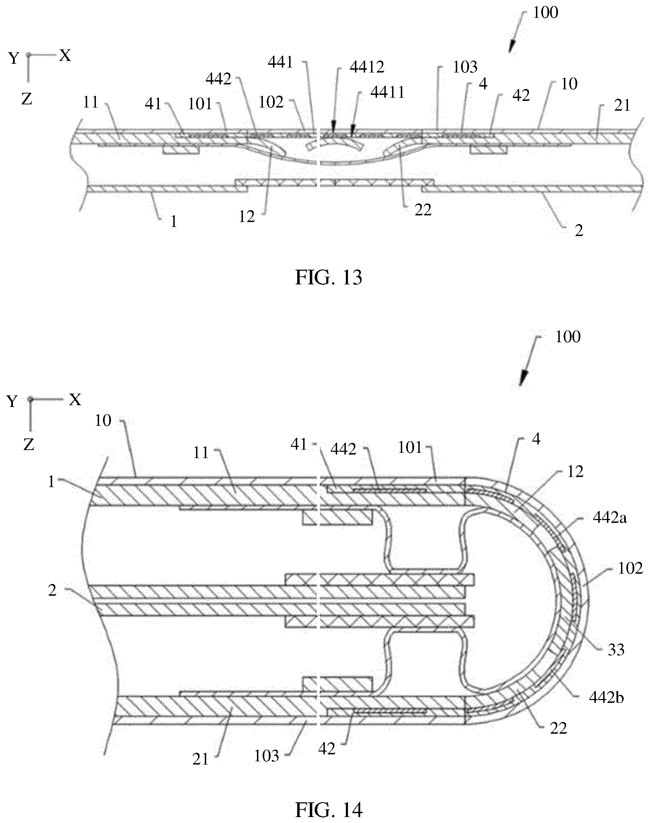

In some embodiments, refer to both FIG. 13 and FIG. 14. FIG. 13 is a sectional view of a partial structure of the electronic device 100 shown in FIG. 1 at a line A1-A1 according to another embodiment. FIG. 14 is a sectional view of a partial structure of the electronic device 100 shown in FIG. 2 at a line A2-A2 according to another embodiment. The embodiment shown in FIG. 14 corresponds to the embodiment shown in FIG. 13. A plane on which the line A1-A1 in FIG. 1 is located and a plane on which the line A2-A2 in FIG. 2 is located are a same plane. A plane on which a line A4-A4 in FIG. 11 is located and the plane on which the line A1-A1 in FIG. 1 is located are also a same plane.

The foldable supporting member 4 is configured to support a part of the first flat part 101 of the flexible display 10, the curved part 102 of the flexible display 10, and a part of the second flat part 103 of the flexible display 10. The first side portion 41 of the foldable supporting member 4 is fastened to the first main housing portion 11, and the second side portion 42 is fastened to the second main housing portion 21. When the first housing 1 is in a folded state with respect to the second housing 2, the first supporting portion 12 and the second supporting portion 22 indirectly support the curved part 102 of the flexible display 10 by using the foldable supporting member 4.

In this embodiment, the foldable supporting member 4 covers the hinge assembly (not shown in the figure), the first supporting portion 12, and the second supporting portion 22. The foldable supporting member 4 is configured to support the flexible display 10. Because the foldable supporting member 4 is in a continuous integrated structure, continuous and smooth support can be provided for the flexible display 10, so that the flexible display 10 looks and feels better.

For example, as shown in FIG. 14, the plurality of supporting bars 442 include a first supporting bar 442a and a second supporting bar 442b. When the first housing 1 is in the folded state with respect to the second housing 2, the first supporting bar 442a is disposed on the first supporting portion 12 and the hinge assembly 3 (for example, the connector 33). To be specific, two sides of the first supporting bar 442a directly face the first supporting portion 12 and the connector 33 respectively, to span a gap between the first supporting portion 12 and the connector 33. The second supporting bar 442b is disposed on the second supporting portion 22 and the hinge assembly 3 (for example, the connector 33). To be specific, two sides of the second supporting bar 442b directly face the second supporting portion 22 and the connector 33 respectively, to span a gap between the second supporting portion 22 and the connector 33.

In this embodiment, when the first housing 1 is in the folded state with respect to the second housing 2, the first supporting portion 12, the foldable supporting member 4, the hinge assembly 3 (for example, the connector 33), and the second supporting portion 22 can cooperate with each other to provide continuous rigid support for the curved part 102 of the flexible display 10, to keep the curved part 102 of the flexible display 10 in a relatively stable shape, and reduce a risk of collapsing or indentation when the curved part 102 of the flexible display 10 is subject to an external force.

For example, as shown in FIG. 13 and FIG. 14, a middle part of the foldable supporting member 4 is fastened (for example, bonded) to a middle part of the curved part 102 of the flexible display 10. The middle part of the foldable supporting member 4 is fastened to the hinge assembly 3. In this embodiment, the flexible display 10 is fastened to the hinge assembly 3. When the first housing 1 rotates with respect to the second housing 2, the middle part of the curved part 102 of the flexible display 10 moves along with the hinge assembly 3, thereby reducing a debonding probability for the curved part 102 of the flexible display 10, and reducing an arching risk for the flexible display 10.

For example, as shown in FIG. 12 and FIG. 13, the flexible substrate 441 includes a first surface 4411 and a second surface 4412 that backs the first surface 4411. The second surface 4412 faces the flexible display 10. The plurality of supporting bars 442 are embedded on the first surface 4411 of the flexible substrate 441. The plurality of supporting bars 442 do not extend to the second surface 4412. The foldable supporting member 4 is in contact with the flexible display 10 through the flexible substrate 441. When the flexible display 10 is subject to an external force, the flexible substrate 441 can perform a buffering function to protect the flexible display 10. In some other embodiments, the plurality of supporting bars 442 can be wrapped by the flexible substrate 441, and the plurality of supporting bars 442 are spaced from both the first surface 4411 and the second surface 4412. In some other embodiments, the plurality of supporting bars 442 extend from the first surface 4411 to the second surface 4412. A relative location relationship between the supporting bars 442 and the flexible substrate 441 is not strictly limited in this application.

In some embodiments, one or more of the supporting bars 442 of the foldable supporting member 4 directly face the first supporting portion 12. The first supporting portion 12 includes a plurality of first supporting blocks. In a direction parallel to the rotation axis 31 of the hinge assembly 3, a spacing between two adjacent first supporting blocks may be less than, equal to, or greater than lengths of the first supporting blocks.

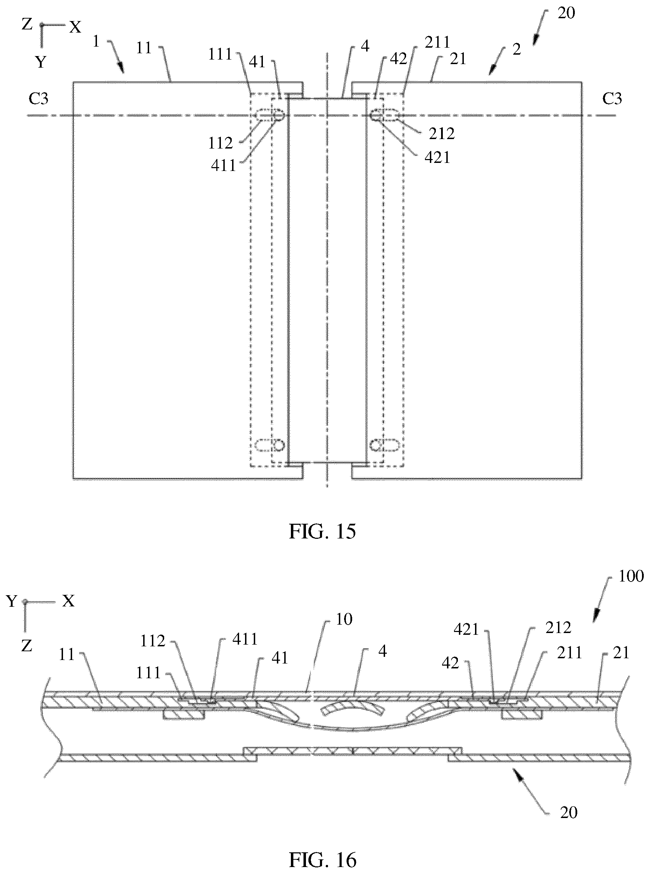

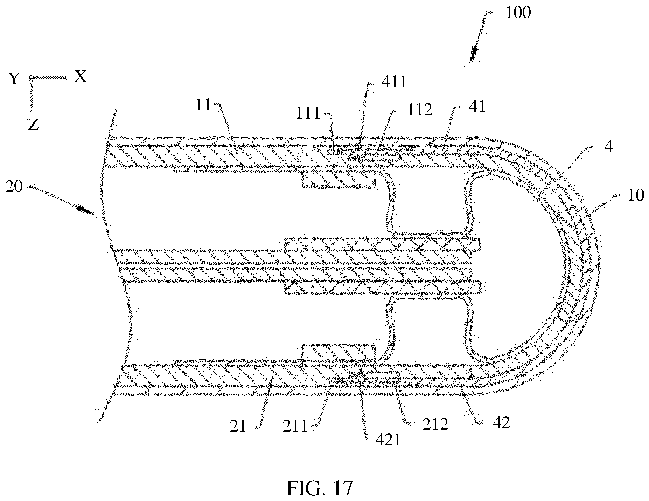

In some embodiments, refer to all of FIG. 15 to FIG. 17. FIG. 15 is a schematic diagram of a structure of the folding assembly 20 of the electronic device 100 shown in FIG. 1 according to still another embodiment. FIG. 16 is a sectional view of a partial structure of the electronic device 100 shown in FIG. 1 at a line C1-C1 according to still another embodiment. FIG. 17 is a sectional view of a partial structure of the electronic device 100 shown in FIG. 2 at a line C2-C2 according to still another embodiment. The embodiments shown in FIG. 15 to FIG. 17 correspond to each other. A plane on which the line C1-C1 in FIG. 1 is located and a plane on which the line C2-C2 in FIG. 2 is located are a same plane. A plane on which a line C3-C3 in FIG. 15 is located and the plane on which the line C1-C1 in FIG. 1 is located are also a same plane.

A difference between this embodiment and the foregoing embodiment lies in that the foldable supporting member 4 is made of an elastic metallic material. The elastic metallic material includes but is not limited to spring steel. The foldable supporting member 4 is in a planar shape or a grid shape. The first side portion 41 of the foldable supporting member 4 is slidably connected to the first main housing portion 11, and the second side portion 42 is slidably connected to the second main housing portion 21. In this embodiment, the foldable supporting member 4 can provide continuous, smooth, and relatively strong support for the flexible display 10, so that the flexible display 10 looks and feels better.

For example, the first main housing portion 11 has a first sliding slot 111 and a first limiting slot 112. The first limiting slot 112 is connected to the first sliding slot 111. The first side portion 41 of the foldable supporting member 4 is slidably mounted in the first sliding slot 111. The first side portion 41 has a convex first limiting block 411. The first limiting block 411 is slidably mounted in the first limiting slot 112. In a process in which the first housing 1 rotates with respect to the second housing 2, the first limiting slot 112 guides and limits a sliding direction and a location of the first limiting block 411, so that the first side portion 41 smoothly slides with respect to the first sliding slot 111. In addition, the first side portion 41 is prevented from accidentally leaving the first sliding slot 111, so that the folding assembly 20 has relatively high reliability. There may be one or more fitting structures of the first limiting block 411 and the first limiting slot 112. In this embodiment, two fitting structures are used as an example for illustration.

The second main housing portion 21 has a second sliding slot 211 and a second limiting slot 212. The second limiting slot 212 is connected to the second sliding slot 211. The second side portion 42 of the foldable supporting member 4 is slidably mounted in the second sliding slot 211. The second side portion 42 has a convex second limiting block 421. The second limiting block 421 is slidably mounted in the second limiting slot 212. In a process of in which the first housing 1 rotates with respect to the second housing 2, the second limiting slot 212 guides and limits a sliding direction and a location of the second limiting block 421, so that the second side portion 42 smoothly slides with respect to the second sliding slot 211. In addition, the second side portion 42 is prevented from accidentally leaving the first sliding slot 111, so that the folding assembly 20 has relatively high reliability. There may be one or more fitting structures of the second limiting block 421 and the second limiting slot 212. In this embodiment, two fitting structures are used as an example for illustration.

It can be understood that, when the foldable supporting member 4 is in a grid shape, grid density and a grid width are designed according to a supporting strength requirement of the folding assembly 20. This is not strictly limited in this application.

It can be understood that, in the foregoing embodiment, the width direction X of the electronic device 100 is perpendicular to the rotation axis 31 of the hinge assembly 3, and the electronic device 100 may have a left-right folding structure. In some other embodiments, the width direction of the electronic device 100 may be alternatively parallel to the rotation axis 31 of the hinge assembly 3, and the electronic device 100 may have an up-down folding structure. This is not strictly limited in this application.

It can be understood that the foregoing embodiment is described by using an example in which the electronic device 100 has a double-folding structure (that is, the electronic device 100 can be folded once). In some other embodiments, the electronic device 100 may alternatively have a triple-folding structure (that is, the electronic device 100 can be folded twice), a quadruple-folding structure (that is, the electronic device 100 can be folded three times), or the like. For a specific structural design of the electronic device 100, refer to the foregoing embodiments. For example, the electronic device 100 further includes a third planar region, and the third planar region is connected to the first planar region 1001 or the second planar region 1003 through another bending region.

## Claims

1. A folding assembly (20), comprising a first housing (1), a second housing (2), and a hinge assembly (3), wherein the hinge assembly is connected between the first housing and the second housing, and the hinge assembly is deformable so that the first housing is folded or unfolded with respect to the second housing;
the first housing comprises a first main housing portion (11) and a first supporting portion (12), wherein the first supporting portion is connected to a side, of the first main housing portion, that is close to the hinge assembly, the second housing comprises a second main housing portion (21) and a second supporting portion (22), and the second supporting portion is connected to a side, of the second main housing portion, that is close to the hinge assembly; and
the first main housing portion is configured to support a first flat part (101) of a flexible display (10), the second main housing portion is configured to support a second flat part (103) of the flexible display, and
when the first housing is in a folded state with respect to the second housing, the first supporting portion and the second supporting portion are configured to jointly support a curved part (102) of the flexible display, wherein the curved part of the flexible display is connected between the first flat part of the flexible display and the second flat part of the flexible display; wherein:
the first supporting portion has a first supporting surface (121), the second supporting portion has a second supporting surface (221), both the first supporting surface and the second supporting surface are arc surfaces, and when the first housing is in the folded state with respect to the second housing, a center line (1211) of the first supporting surface coincides with a center line of the second supporting surface (2211).

2. The folding assembly (20) according to claim 1, wherein the first supporting portion (12) is in a long strip shape, and an extension direction of the first supporting portion is parallel to a rotation axis (31) of the hinge assembly (3); or
the first supporting portion comprises a plurality of first supporting blocks arranged at intervals, and an arrangement direction of the plurality of first supporting blocks is parallel to a rotation axis of the hinge assembly.

3. The folding assembly (20) according to claim 1 or 2, wherein the hinge assembly (3) comprises one or more rotary members (32), two ends of the rotary member are arranged to rotate with respect to each other, the two ends of the rotary member are respectively connected to the first main housing portion (11) and the second main housing portion (21), and both the first supporting portion (12) and the second supporting portion (22) are arranged in a staggered manner with the rotary member.

4. The folding assembly (20) according to claim 3, wherein the folding assembly has a wiring space, the wiring space comprises a first cavity, a first space, a connection space, a second space, and a second cavity that are successively connected, the first cavity is located in the first main housing portion (11), the first space corresponds to the first supporting portion (12), the second space corresponds to the second supporting portion (22), and the second cavity is located in the second main housing portion (21).

5. The folding assembly (20) according to claim 4, wherein the folding assembly further comprises a first sliding plate (501), a second sliding plate (502), and a rotary connector (503), the rotary connector is connected between the first sliding plate and the second sliding plate, the rotary connector is deformable so that the first sliding plate is folded or unfolded with respect to the second sliding plate, the first sliding plate is slidably connected to the first main housing portion (11), and the second sliding plate is slidably connected to the second main housing portion (21); and
the first space is formed between the first supporting portion (12) and the first sliding plate, and the second space is formed between the second supporting portion (22) and the second sliding plate.

6. The folding assembly (20) according to claim 5, wherein the hinge assembly (3) further comprises a connector (33), the hinge assembly comprises a plurality of rotary members (32), the plurality of rotary members are arranged at intervals and an arrangement direction is parallel to the rotation axis (31) of the hinge assembly, and the connector connects the plurality of rotary members; and
the connection space is formed between the connector and the first sliding plate (501) and between the connector and the second sliding plate (502).

7. The folding assembly (20) according to claim 6, wherein the connector (33) has a third supporting surface (331), the third supporting surface is located on a side, of the connector, that is far away from the first sliding plate (501) and the second sliding plate (502), and the third supporting surface is configured to support the curved part (102) of the flexible display.

8. The folding assembly (20) according to claim 7, wherein the third supporting surface (331) is an arc surface, and when the first housing (1) is in the folded state with respect to the second housing (2), a center line (3311) of the third supporting surface coincides with the center line of the first supporting surface (121).

9. The folding assembly (20) according to claim 3, wherein the rotary member (32) has a fourth supporting surface (321), and the fourth supporting surface is configured to support the curved part (102) of the flexible display (10).

10. The folding assembly (20) according to claim 1 or 2, wherein the folding assembly further comprises a foldable supporting member (4), the foldable supporting member comprises a first side portion (41) and a second side portion (42) away from the first side portion, and the foldable supporting member is deformable so that the first side portion is folded or unfold with respect to the second side portion; and
the first side portion is connected to the first main housing portion (11), the second side portion is connected to the second main housing portion (21), and the foldable supporting member is configured to support a part of the first flat part (101) of the flexible display (10), the curved part (102) of the flexible display, and a part of the second flat part (103) of the flexible display.

11. The folding assembly (20) according to claim 10, wherein the foldable supporting member (4) comprises a flexible substrate and a plurality of supporting bars fastened to the flexible substrate at intervals, an extension direction of each of the supporting bars is parallel to the rotation axis (31) of the hinge assembly (3), an arrangement direction of the plurality of supporting bars is perpendicular to the rotation axis of the hinge assembly, the first side portion (41) is fastened to the first main housing portion (11), and the second side portion (42) is fastened to the second main housing portion (21).

12. The folding assembly (20) according to claim 11, wherein the plurality of supporting bars comprise a first supporting bar and a second supporting bar, and when the first housing (1) is in the folded state with respect to the second housing (2), the first supporting bar is disposed on the first supporting portion (12) and the hinge assembly (3), and the second supporting bar is disposed on the second supporting portion (22) and the hinge assembly.

13. The folding assembly (20) according to claim 10, wherein the foldable supporting member (4) is made of an elastic metallic material, the foldable supporting member is in a planar shape or a grid shape, the first side portion is slidably connected to the first main housing portion (11), and the second side portion is slidably connected to the second main housing portion (21).

14. An electronic device (100), comprising a flexible display (10) and the folding assembly (20) according to any one of claims 1 to 13.

15. The electronic device (100) according to claim 14, wherein the electronic device further comprises a flexible circuit board (40), the flexible circuit board spans the first supporting portion (12) and the second supporting portion (22), and two ends of the flexible circuit board are respectively accommodated on an inner side of the first main housing portion (11) and an inner side of the second main housing portion (21).

## Patentansprüche

1. Klappbaugruppe (20), die ein erstes Gehäuse (1), ein zweites Gehäuse (2) und eine Scharnierbaugruppe (3) umfasst, wobei die Scharnierbaugruppe zwischen dem ersten Gehäuse und dem zweiten Gehäuse angebracht ist und die Scharnierbaugruppe so verformbar ist, dass das erste Gehäuse in Bezug auf das zweite Gehäuse zusammengeklappt oder auseinandergeklappt wird;
das erste Gehäuse einen ersten Hauptgehäuseabschnitt (11) und einen ersten Stützabschnitt (12) umfasst, wobei der erste Stützabschnitt mit einer Seite des ersten Hauptgehäuseabschnitts verbunden ist, die sich in der Nähe der Scharnierbaugruppe befindet; das zweite Gehäuse einen zweiten Hauptgehäuseabschnitt (21) und einen zweiten Stützabschnitt (22) umfasst, wobei der zweite Stützabschnitt mit einer Seite des zweiten Hauptgehäuseabschnitts verbunden ist, die sich in der Nähe der Scharnierbaugruppe befindet; und
der erste Hauptgehäuseteil so konfiguriert ist, dass er einen ersten flachen Teil (101) einer flexiblen Anzeige (10) trägt, der zweite Hauptgehäuseteil so konfiguriert ist, dass er einen zweiten flachen Teil (103) der flexiblen Anzeige trägt, und wenn sich das erste Gehäuse in Bezug auf das zweite Gehäuse in einem zusammengeklappten Zustand befindet, der erste Stützabschnitt und der zweite Stützabschnitt so konfiguriert sind, dass sie gemeinsam einen gekrümmten Teil (102) der flexiblen Anzeige stützen, wobei der gekrümmte Teil der flexiblen Anzeige zwischen dem ersten flachen Teil der flexiblen Anzeige und dem zweiten flachen Teil der flexiblen Anzeige verbunden ist; wobei:
der erste Stützabschnitt eine erste Stützfläche (121) aufweist, der zweite Stützabschnitt eine zweite Stützfläche (221) aufweist, sowohl die erste Stützfläche als auch die zweite Stützfläche Bogenflächen sind, und wenn sich das erste Gehäuse in Bezug auf das zweite Gehäuse im zusammengeklappten Zustand befindet, eine Mittellinie (1211) der ersten Stützfläche mit einer Mittellinie der zweiten Stützfläche (2211) übereinstimmt.

2. Klappbaugruppe (20) nach Anspruch 1, wobei der erste Stützabschnitt (12) die Form eines langen Streifens hat und eine Erstreckungsrichtung des ersten Stützabschnitts parallel zu einer Drehachse (31) der Scharnierbaugruppe (3) verläuft; oder der erste Stützabschnitt eine Vielzahl von in Abständen angeordneten ersten Stützblöcken umfasst, und eine Anordnungsrichtung der Vielzahl von ersten Stützblöcken parallel zu einer Drehachse der Scharnierbaugruppe verläuft.

3. Klappbaugruppe (20) nach Anspruch 1 oder 2, wobei die Scharnierbaugruppe (3) ein oder mehrere Drehelemente (32) umfasst, zwei Enden des Drehelements so angeordnet sind, dass sie sich relativ zueinander drehen, die beiden Enden des Drehelements jeweils mit dem ersten Hauptgehäuseabschnitt (11) und dem zweiten Hauptgehäuseabschnitt (21) verbunden sind und sowohl der erste Stützabschnitt (12) als auch der zweite Stützabschnitt (22) versetzt zum Drehelement angeordnet sind.

4. Klappbaugruppe (20) nach Anspruch 3, wobei die Klappbaugruppe einen Verdrahtungsraum aufweist, der Verdrahtungsraum einen ersten Hohlraum, einen ersten Raum, einen Verbindungsraum, einen zweiten Raum und einen zweiten Hohlraum umfasst, die nacheinander verbunden sind, der erste Hohlraum sich im ersten Hauptgehäuseabschnitt (11) befindet, der erste Raum dem ersten Stützabschnitt (12) entspricht, der zweite Raum dem zweiten Stützabschnitt (22) entspricht und der zweite Hohlraum sich im zweiten Hauptgehäuseabschnitt (21) befindet.

5. Klappbaugruppe (20) nach Anspruch 4, wobei die Klappbaugruppe ferner eine erste Gleitplatte (501), eine zweite Gleitplatte (502) und einen Drehverbinder (503) umfasst, wobei der Drehverbinder zwischen der ersten Gleitplatte und der zweiten Gleitplatte angeschlossen ist, wobei der Drehverbinder verformbar ist, sodass die erste Gleitplatte in Bezug auf die zweite Gleitplatte zusammengeklappt oder ausgeklappt wird, wobei die erste Gleitplatte verschiebbar mit dem ersten Hauptgehäuseabschnitt (11) verbunden ist und die zweite Gleitplatte verschiebbar mit dem zweiten Hauptgehäuseabschnitt (21) verbunden ist; und
der erste Raum zwischen dem ersten Stützabschnitt (12) und der ersten Gleitplatte gebildet wird, und der zweite Raum zwischen dem zweiten Stützabschnitt (22) und der zweiten Gleitplatte gebildet wird.

6. Klappbaugruppe (20) nach Anspruch 5, wobei die Scharnierbaugruppe (3) ferner einen Verbinder (33) umfasst, die Scharnierbaugruppe eine Vielzahl von Drehelementen (32) umfasst, wobei die Vielzahl von Drehelementen in Abständen angeordnet sind und eine Anordnungsrichtung parallel zur Drehachse (31) der Scharnierbaugruppe verläuft, und der Verbinder die Vielzahl von Drehelementen verbindet; und
der Verbindungsraum zwischen dem Verbinder und der ersten Gleitplatte (501) und zwischen dem Verbinder und der zweiten Gleitplatte (502) gebildet wird.

7. Klappbaugruppe (20) nach Anspruch 6, wobei der Verbinder (33) eine dritte Stützfläche (331) aufweist, die dritte Stützfläche sich auf einer Seite des Verbinders befindet, die weit von der ersten Gleitplatte (501) und der zweiten Gleitplatte (502) entfernt ist, und die dritte Stützfläche so konfiguriert ist, dass sie den gekrümmten Teil (102) der flexiblen Anzeige stützt.

8. Klappbaugruppe (20) nach Anspruch 7, wobei die dritte Stützfläche (331) eine Bogenfläche ist und wenn sich das erste Gehäuse (1) in Bezug auf das zweite Gehäuse (2) im zusammengeklappten Zustand befindet, eine Mittellinie (3311) der dritten Stützfläche mit der Mittellinie der ersten Stützfläche (121) übereinstimmt.

9. Klappbaugruppe (20) nach Anspruch 3, wobei das Drehelement (32) eine vierte Stützfläche (321) aufweist und die vierte Stützfläche dazu ausgelegt ist, den gekrümmten Teil (102) der flexiblen Anzeige (10) zu stützen.

10. Klappbaugruppe (20) nach Anspruch 1 oder 2, wobei die Klappbaugruppe ferner ein klappbares Stützelement (4) umfasst, das klappbare Stützelement einen ersten Seitenabschnitt (41) und einen zweiten Seitenabschnitt (42) entfernt vom ersten Seitenabschnitt umfasst und das klappbare Stützelement so verformbar ist, dass der erste Seitenabschnitt in Bezug auf den zweiten Seitenabschnitt zusammengeklappt oder auseinandergeklappt wird; und
der erste Seitenabschnitt mit dem ersten Hauptgehäuseabschnitt (11) verbunden ist, der zweite Seitenabschnitt mit dem zweiten Hauptgehäuseabschnitt (21) verbunden ist und das klappbare Stützelement so konfiguriert ist, dass es einen Teil des ersten flachen Teils (101) der flexiblen Anzeige (10), den gekrümmten Teil (102) der flexiblen Anzeige und einen Teil des zweiten flachen Teils (103) der flexiblen Anzeige stützt.

11. Klappbaugruppe (20) nach Anspruch 10, wobei das klappbare Stützelement (4) ein flexibles Substrat und eine Vielzahl von Stützstangen umfasst, die in Abständen an dem flexiblen Substrat befestigt sind, eine Erstreckungsrichtung jeder der Stützstangen parallel zur Drehachse (31) der Scharnierbaugruppe (3) ist, eine Anordnungsrichtung der Vielzahl von Stützstangen senkrecht zur Drehachse der Scharnierbaugruppe ist, der erste Seitenabschnitt (41) an dem ersten Hauptgehäuseabschnitt (11) befestigt ist und der zweite Seitenabschnitt (42) an dem zweiten Hauptgehäuseabschnitt (21) befestigt ist.

12. Klappbaugruppe (20) nach Anspruch 11, wobei die Vielzahl von Stützstangen eine erste Stützstange und eine zweite Stützstange umfasst, und wenn sich das erste Gehäuse (1) in Bezug auf das zweite Gehäuse (2) im zusammengeklappten Zustand befindet, die erste Stützstange auf dem ersten Stützabschnitt (12) und der Scharnierbaugruppe (3) angeordnet ist und die zweite Stützstange auf dem zweiten Stützabschnitt (22) und der Scharnierbaugruppe angeordnet ist.

13. Klappbaugruppe (20) nach Anspruch 10, wobei das klappbare Stützelement (4) aus einem elastischen metallischen Material besteht, das klappbare Stützelement eine ebene Form oder eine Gitterform aufweist, der erste Seitenabschnitt verschiebbar mit dem ersten Hauptgehäuseabschnitt (11) verbunden ist und der zweite Seitenabschnitt verschiebbar mit dem zweiten Hauptgehäuseabschnitt (21) verbunden ist.

14. Elektronische Vorrichtung (100), umfassend eine flexible Anzeige (10) und die Klappbaugruppe (20) nach einem der Ansprüche 1 bis 13.

15. Elektronische Vorrichtung (100) nach Anspruch 14, wobei die elektronische Vorrichtung ferner eine flexible Leiterplatte (40) umfasst, wobei sich die flexible Leiterplatte über den ersten Stützabschnitt (12) und den zweiten Stützabschnitt (22) erstreckt und zwei Enden der flexiblen Leiterplatte jeweils an einer Innenseite des ersten Hauptgehäuseabschnitts (11) und einer Innenseite des zweiten Hauptgehäuseabschnitts (21) untergebracht sind.

## Revendications

1. Ensemble de pliage (20), comprenant un premier boîtier (1), un second boîtier (2), et un ensemble charnière (3), dans lequel l'ensemble charnière est relié entre le premier boîtier et le second boîtier, et l'ensemble charnière est déformable de sorte que le premier boîtier est plié ou déplié par rapport au second boîtier ;
le premier boîtier comprend une première partie de boîtier principal (11) et une première partie de support (12), dans lequel la première partie de support est reliée à un côté, de la première partie de boîtier principal, qui est proche de l'ensemble charnière, le second boîtier comprend une seconde partie de boîtier principal (21) et une seconde partie de support (22), et la seconde partie de support est reliée à un côté, de la seconde partie de boîtier principal, qui est proche de l'ensemble charnière ; et
la première partie de boîtier principal est configurée pour supporter une première partie plate (101) d'un écran flexible (10), la seconde partie de boîtier principal est configurée pour supporter une seconde partie plate (103) de l'écran flexible, et
lorsque le premier boîtier est dans un état plié par rapport au second boîtier, la première partie de support et la seconde partie de support sont configurées pour supporter conjointement une partie incurvée (102) de l'écran flexible, dans lequel la partie incurvée de l'écran flexible est reliée entre la première partie plate de l'écran flexible et la seconde partie plate de l'écran flexible ; dans lequel :
la première partie de support a une première surface de support (121), la seconde partie de support a une deuxième surface de support (221), la première surface de support et la deuxième surface de support sont toutes deux des surfaces en arc, et lorsque le premier boîtier est dans l'état plié par rapport au second boîtier, une ligne centrale (1211) de la première surface de support coïncide avec une ligne centrale de la deuxième surface de support (2211).

2. Ensemble de pliage (20) selon la revendication 1, dans lequel la première partie de support (12) présente une forme de bande allongée, et une direction d'extension de la première partie de support est parallèle à un axe de rotation (31) de l'ensemble charnière (3) ; ou
la première partie de support comprend une pluralité de premiers blocs de support disposés à intervalles réguliers, et une direction d'agencement de la pluralité de premiers blocs de support est parallèle à un axe de rotation de l'ensemble charnière.

3. Ensemble de pliage (20) selon la revendication 1 ou 2, dans lequel l'ensemble charnière (3) comprend un ou plusieurs éléments rotatifs (32), deux extrémités de l'élément rotatif sont agencées pour tourner l'une par rapport à l'autre, les deux extrémités de l'élément rotatif sont respectivement reliées à la première partie de boîtier principal (11) et à la seconde partie de boîtier principal (21), et la première partie de support (12) et la seconde partie de support (22) sont toutes deux agencées de manière décalée par rapport à l'élément rotatif.

4. Ensemble de pliage (20) selon la revendication 3, dans lequel l'ensemble de pliage a un espace de câblage, l'espace de câblage comprend une première cavité, un premier espace, un espace de liaison, un second espace, et une seconde cavité qui sont successivement reliés, la première cavité est située dans la première partie de boîtier principal (11), le premier espace correspond à la première partie de support (12), le second espace correspond à la seconde partie de support (22), et la seconde cavité est située dans la seconde partie de boîtier principal (21).

5. Ensemble de pliage (20) selon la revendication 4, dans lequel l'ensemble de pliage comprend également une première plaque coulissante (501), une seconde plaque coulissante (502), et un connecteur rotatif (503), le connecteur rotatif est relié entre la première plaque coulissante et la seconde plaque coulissante, le connecteur rotatif est déformable de sorte que la première plaque coulissante est pliée ou dépliée par rapport à la seconde plaque coulissante, la première plaque coulissante est reliée de manière coulissante à la première partie de boîtier principal (11), et la seconde plaque coulissante est reliée de manière coulissante à la seconde partie de boîtier principal (21) ; et le premier espace est formé entre la première partie de support (12) et la première plaque coulissante, et le second espace est formé entre la seconde partie de support (22) et la seconde plaque coulissante.

6. Ensemble de pliage (20) selon la revendication 5, dans lequel l'ensemble charnière (3) comprend également un connecteur (33), l'ensemble charnière comprend une pluralité d'éléments rotatifs (32), la pluralité d'éléments rotatifs sont disposés à intervalles réguliers et une direction d'agencement est parallèle à l'axe de rotation (31) de l'ensemble charnière, et le connecteur relie la pluralité d'éléments rotatifs ; et
l'espace de liaison est formé entre le connecteur et la première plaque coulissante (501) et entre le connecteur et la seconde plaque coulissante (502).

7. Ensemble de pliage (20) selon la revendication 6, dans lequel le connecteur (33) a une troisième surface de support (331), la troisième surface de support est située sur un côté, du connecteur, qui est très éloigné de la première plaque coulissante (501) et de la seconde plaque coulissante (502), et la troisième surface de support est configurée pour supporter la partie incurvée (102) de l'écran flexible.

8. Ensemble de pliage (20) selon la revendication 7, dans lequel la troisième surface de support (331) est une surface en arc, et lorsque le premier boîtier (1) est dans l'état plié par rapport au second boîtier (2), une ligne centrale (3311) de la troisième surface de support coïncide avec la ligne centrale de la première surface de support (121).

9. Ensemble de pliage (20) selon la revendication 3, dans lequel l'élément rotatif (32) a une quatrième surface de support (321), et la quatrième surface de support est configurée pour supporter la partie incurvée (102) de l'écran flexible (10).

10. Ensemble de pliage (20) selon la revendication 1 ou 2, dans lequel l'ensemble de pliage comprend également un élément de support pliable (4), l'élément de support pliable comprend une première partie latérale (41) et une seconde partie latérale (42) éloignée de la première partie latérale, et l'élément de support pliable est déformable de sorte que la première partie latérale est pliée ou dépliée par rapport à la seconde partie latérale ; et
la première partie latérale est reliée à la première partie de boîtier principal (11), la seconde partie latérale est reliée à la seconde partie de boîtier principal (21), et l'élément de support pliable est configuré pour supporter une partie de la première partie plate (101) de l'écran flexible (10), la partie incurvée (102) de l'écran flexible, et une partie de la seconde partie plate (103) de l'écran flexible.

11. Ensemble de pliage (20) selon la revendication 10, dans lequel l'élément de support pliable (4) comprend un substrat flexible et une pluralité de barres de support fixées au substrat flexible à intervalles réguliers, une direction de prolongement de chacune des barres de support est parallèle à l'axe de rotation (31) de l'ensemble charnière (3), une direction d'agencement de la pluralité de barres de support est perpendiculaire à l'axe de rotation de l'ensemble charnière, la première partie latérale (41) est fixée à la première partie de boîtier principal (11), et la seconde partie latérale (42) est fixée à la seconde partie de boîtier principal (21).

12. Ensemble de pliage (20) selon la revendication 11, dans lequel la pluralité de barres de support comprend une première barre de support et une seconde barre de support, et lorsque le premier boîtier (1) est dans l'état plié par rapport au second boîtier (2), la première barre de support est disposée sur la première partie de support (12) et l'ensemble charnière (3), et la seconde barre de support est disposée sur la seconde partie de support (22) et l'ensemble charnière.

13. Ensemble de pliage (20) selon la revendication 10, dans lequel l'élément de support pliable (4) est constitué d'un matériau métallique élastique, l'élément de support pliable présente une forme plane ou une forme de grille, la première partie latérale est reliée de manière coulissante à la première partie de boîtier principal (11), et la seconde partie latérale est reliée de manière coulissante à la seconde partie de boîtier principal (21).

14. Dispositif électronique (100) comprenant un écran flexible (10) et l'ensemble de pliage (20) selon l'une quelconque des revendications 1 à 13.

15. Dispositif électronique (100) selon la revendication 14, dans lequel le dispositif électronique comprend également une carte de circuit imprimé flexible (40), la carte de circuit imprimé flexible s'étend sur la première partie de support (12) et la seconde partie de support (22), et deux extrémités de la carte de circuit imprimé flexible sont respectivement logées sur un côté intérieur de la première partie de boîtier principal (11) et un côté intérieur de la seconde partie de boîtier principal (21).
